(19) **Europäisches Patentamt**
**European Patent Office**
**Office européen des brevets**

(11) **EP 1 585 704 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**27.04.2022 Patentblatt 2022/17**

(45) Hinweis auf die Patenterteilung:
**01.08.2012 Patentblatt 2012/31**

(21) Anmeldenummer: **04700701.8**

(22) Anmeldetag: **08.01.2004**

(51) Internationale Patentklassifikation (IPC):
**B82Y 30/00** (2011.01) **C01B 33/193** (2006.01)
**C08K 3/36** (2006.01)

(52) Gemeinsame Patentklassifikation (CPC):
(C-Sets verfügbar)
**C01B 33/12; B82Y 30/00; C01B 33/193; C08K 3/36;** C01P 2004/64; C01P 2006/12; C01P 2006/19; C01P 2006/82; C01P 2006/90
(Forts.)

(86) Internationale Anmeldenummer:
**PCT/EP2004/050005**

(87) Internationale Veröffentlichungsnummer:
**WO 2004/065299 (05.08.2004 Gazette 2004/32)**

(54) **HÖCHSTDISPERGIERBARE SILICAS FÜR GUMMIANWENDUNGEN**

HIGHLY DISPERSIBLE SILICA FOR USING IN RUBBER

SILICES HAUTEMENT DISPERSIBLES DESTINEES ETRE UTILISEES DANS DES CAOUTCHOUCS

(84) Benannte Vertragsstaaten:
**AT BE BG CH CY CZ DE DK EE ES FI FR GB GR HU IE IT LI LU MC NL PT RO SE SI SK TR**

(30) Priorität: **22.01.2003 DE 10302300**
**13.12.2003 DE 10358449**

(43) Veröffentlichungstag der Anmeldung:
**19.10.2005 Patentblatt 2005/42**

(73) Patentinhaber: **Evonik Operations GmbH**
**45128 Essen (DE)**

(72) Erfinder:
• **STENZEL, Oleg**
**50999 Köln (DE)**
• **BLUME, Anke**
**53919 Weilerswist (DE)**
• **LUGINSLAND, Detlef**
**Hoboken, NJ 07030 (US)**

• **UHRLANDT, Stefan**
**Belle Mead, NJ 08502 (US)**
• **WEHMEIER, André**
**48429 Rheine (DE)**

(56) Entgegenhaltungen:
| | |
|---|---|
| EP-A- 0 754 650 | EP-A- 0 755 899 |
| EP-A- 0 901 986 | EP-A- 0 983 966 |
| EP-A1- 0 754 650 | EP-A1- 0 901 986 |
| EP-A1- 0 983 966 | EP-A2- 0 755 899 |
| WO-A-03/106339 | WO-A1-03/106339 |
| WO-A2-2004/065443 | DE-A1- 10 124 298 |
| US-A- 4 001 379 | US-A1- 2003 003 040 |
| US-B1- 6 180 076 | US-B1- 6 268 424 |

**EP 1 585 704 B2**

**(Forts. nächste Seite)**

(52) Gemeinsame Patentklassifikation (CPC): (Forts.)

    C-Sets
    **C08K 3/36**

## Beschreibung

Die vorliegende Erfindung betrifft hoch disperse Fällungskieselsäuren, die eine äußerst hohe Verstärkung von Kautschukvulkanisaten und Vorteile in der Vulkanisationszeit aufweisen, ein Verfahren zu deren Herstellung und deren Verwendung als Füllstoff für Gummimischungen.

Der Einsatz von Fällungskieselsäuren in Elastomermischungen wie zum Beispiel Reifenlaufflächenmischungen ist lange bekannt (EP 0 501 227). Für die Verwendung von Kieselsäuren als verstärkenden Füllstoff in Kautschukmischungen, wie sie u.a. zur Herstellung von luftgefüllten Reifen und technischen Gummiartikeln Verwendung finden, werden hohe Anforderungen gestellt. Sie sollen leicht und gut im Kautschuk einarbeitbar und dispergierbar sein und in Verbindung mit einem Kopplungsreagenz, vorzugsweise einer bifunktionellen Organosiliziumverbindung, eine chemische Verbindung mit dem Kautschuk eingehen, die zu der angestrebten hohen Verstärkung der Gummimischung führt. Die Verstärkungseigenschaft kann insbesondere an hohen statischen Spannungswerten und einem niedrigen Abriebswert festgemacht werden. Für die Verstärkungseigenschaft der Kieselsäuren ist insbesondere die Teilchengröße, Oberflächenmorphologie, Oberflächenaktivität sowie das Anbindungsvermögen des Kopplungsreagenzes von entscheidender Bedeutung.

Es ist bekannt, dass die Eigenschaften einer Kieselsäure maßgeblich durch ihr Herstellungsverfahren bestimmt werden. Insbesondere sind die Bedingungen der Fällung für die Eigenschaften verantwortlich. Dem Fachmann sind Herstellungsverfahren für Kieselsäuren mit unterschiedlichsten Fällungsbedingungen bekannt. So wurden Fällungen bei konstantem pH-Wert in der EP 0 937 755 beschrieben. Kieselsäuren, die bei konstantem Kationenüberschuss gefällt wurden, wurden in der DE 101 24 298 offenbart. In der DE 10112 441 A1, der EP 0 754 650, der EP0 755 899 und der US 4001 379 wurden Fällungen bei konstanter Alkalizahl (AZ-Zahl) beschrieben.

Kieselsäuren, die bei konstanter AZ-Zahl gefällt wurden, werden als Trägermaterialien, Mattierungsmittel für Lacke, als Batterieseparatoren, in Zahnpasten oder als Flockungshilfsmittel verwendet. Für Anwendungen in Elastomeren oder Gummimischungen geeignete Kieselsäuren, die bei konstanter AZ-Zahl gefällt wurden, sind bisher nicht bekannt.

In der Regel werden Kieselsäuren für Gummianwendungen nach einem Verfahren hergestellt, bei dem die Fällung bei Temperaturen zwischen 60 bis 95 °C und einem pH-Wert zwischen 7 und 10 erfolgt, siehe z. B. EP 0 901 986 A1.

Ziel der vorliegenden Erfindung ist es, neue, leicht dispergierbare Fällungskieselsäuren zur Verfügung zu stellen, welche in Elastomermischungen eingearbeitet werden können und deren Eigenschaften verbessern.

Überraschend hat sich nun gezeigt, dass durch die Fällung bei einer konstanten AZ-Zahl, neue Kieselsäuren erhalten werden können, die besonders gut in Elastomerenmischungen eingearbeitet werden können und deren Eigenschaften verbessern.

Gegenstand der vorliegenden Erfindung, sind daher leicht dispergierbare Fällungskieselsäuren charakterisiert durch:

| | |
|---|---|
| CTAB-Oberfläche | 100 - 160 $m^2$/g mit dem Vorzugsbereichen von 100 - 150 $m^2$/g, 100 - 135 $m^2$/g und 100 -120 $m^2$/g, |
| BET-Oberfläche | 100 -190 $m^2$/g mit dem Vorzugsbereich von 100 -170 $m^2$/g, 100 - 160 $m^2$/g, 100 - 140 $m^2$/g und 110 - 135 $m^2$/g, |
| DBP-Zahl | 180 - 300 g/(100 g), Vorzugsbereich 200 - 280 g/(100 g), |
| Searszahl $V_2$ | 15 - 28 ml/(5 g) mit dem Vorzugsbereich von 20 - 28 ml/(5 g), 22 - 28 ml/(5 g) und besonders 25 - 28 ml/(5 g), |
| Feuchte | 4-8%. |

Ferner können die erfindungsgemäßen Fällungskieselsäuren bevorzugt einen oder mehrere der folgenden physikalisch-chemischen Parameter aufweisen:

| | |
|---|---|
| Verhältnis Searszahl $V_2$ zu BET-Oberfläche | 0.140 - 0.280 ml/(5 $m^2$), mit den Vorzugsbereichen 0.150 - 0.280 ml/(5 $m^2$), 0.170 - 0.280 mol/(5 $m^2$), 0.180 - 0.280 ml/(5 $m^2$) und besonders bevorzugt 0.190 - 0.280 ml/ (5 $m^2$) und 0.190 - 0.250 ml/(5 $m^2$), |
| Verhältnis BET zu CTAB | 0.9 -1.2, bevorzugt 1 - 1.15, |
| Primärteilchendurchmesser | 10 - 80 nm. |

Der Primärteilchendurchmesser kann z. B. mittes der Bildauswertung der Transmissions-Elektronenspektroskopie (TEM) bestimmt werden (R H. Lange, J. Bloedorn: "Das Elektronenmikroskop, TEM + REM" Thieme Verlag, Stuttgart, New York (1981)).

In einer ersten bevorzugten Ausführungsform weisen die erfindungsgemäßen Fällungskieselsäuren eine DBP-Zahl 200 - 250 g/(100 g) und in einer zweiten bevorzugten Ausführungsform eine DBP-Zahl von 250 - 280 g/(100 g) auf.

Die erfindungsgemäßen Fällungskieselsäuren weisen neben einer hohen absoluten Zahl an Silanolgruppen (Searszahl $V_2$), ein im Vergleich zu Fällungskieselsäuren des Standes der Technik stark erhöhtes Verhältnis der Searszahl $V_2$ zur BET-Oberfläche auf. D. h. die erfindungsgemäßen Fällungskieselsäuren weisen insbesondere im Bezug auf die Gesamtoberfläche eine sehr hohe Zahl an Silanolgruppen auf.

Neben der erhöhten Zahl an Silanolgruppen zeichnen sich die erfindungsgemäßen Fällungskieselsäuren durch eine geringe Mikroporosität, d. h. ein sehr niedriges BET zu CTAB-Verhältnis aus.

Die Kombination der genannten Merkmale, insbesondere das hohe Searszahl $V_2$/BET-Verhältnis führen dazu, dass sich die erfindungsgemäßen Fällungskieselsäuren hervorragend als Verstärkerfüllstoff für Elastomere eignen. Die erfindungsgemäßen Fällungskieselsäuren zeichnen sich dabei durch eine erhöhte Kautschukaktivität aus, zeigen ein sehr gutes Dispersionsverhalten und eine niedrigere Vulkanisationszeit.

Ein weiterer Gegenstand der vorliegenden Erfindung ist ein Verfahren gemäß Ansprüchen 9 bis 14

Die Vorlage kann ca. 20, 30, 40, 50, 60, 70, 80 oder 90 % des Endvolumens der Fällung betragen. Die zur Vorlage gegebenen basischen Verbindungen sind insbesondere ausgewählt aus der Gruppe der Alkalihydroxide, Erdalkalihydroxide, Alkalicarbonate, Alkalihydrogencarbonate und Alkalisilikate. Bevorzugt werden Wesserglas und/oder Natronlauge verwendet.

Die konstante Alkalizahl in der Vorlage und während des Schrittes b) liegt im Bereich von 7 bis 30, bevorzugt bei 10 bis 30, besonders bevorzugt liegt sie bei 15 bis 25, ganz besonders bevorzugt wird die AZ-Zahl auf einem Wert zwischen 18 und 22 gehalten.

Optional kann die Zudosierung während Schritt b) unterbrochen werden, wobei dann die Schritte

b') Stoppen der Zudosierung für 30 bis 90 Minuten unter Einhaltung der Temperatur und

b") anschließend bei gleicher Temperatur für 10 bis 120, bevorzugt 10 bis 60 Minuten, gleichzeitig Wasserglas und ein Säuerungsmittel derart zudosieren, dass die AZ-Zahl während der Fällung konstant bleibt,

ausgeführt werden.

Ferner kann optional eine zusätzliche Zugabe von organischen oder anorganischen Salzen während der Schritte a) und/oder b) und/oder b') und/oder b") erfolgen. Dies kann in Lösung oder als Feststoff, jeweils kontinuierlich über die Zugabezeit des Wasserglases und des Säuerungsmittels oder als Batchzugabe durchgeführt werden. Es ist auch möglich, die Salze in einer oder beiden Komponenten zu lösen und dann gleichzeitig mit diesen zuzugeben.

Als anorganische Salze werden bevorzugt Alkali- oder Erdalkalisalze verwendet. Insbesondere können alle Kombinationen der folgenden Ionen eingesetzt werden: $Li^+$, $Na^+$, $K^+$, $Rb^+$, $Be^{2+}$, $Mg^{2+}$, $Ca^{2+}$ $Sr^{2+}$, $Ba^{2+}$, $H^+$, $F^-$, $Cl^-$, $Br^-$, $I^-$, $SO_3^{2-}$, $SO_4^{2-}$, $HSO_4^-$, $PO_3^{3-}$, $PO_4^{3-}$, $NO_3^-$, $NO_2^-$, $CO_3^{2-}$, $HCO_3^-$, $OH^-$, $TiO_3^{2-}$, $ZrO_3^{2-}$, $ZrO_4^{4-}$, $AlO_2^-$, $Al_2O_4^{2-}$, $BO_4^{3-}$.

Als organische Salze sind die Salze der Ameisen-, Essig- und Propionsäure geeignet. Als Kation seien die genannten Alkali- oder Erdalkaliionen genannt. Die Konzentration dieser Salze in der Zugabelösung kann 0.01 bis 5 mol/l betragen. Bevorzugt wird als anorganisches Salz $Na_2SO_4$ verwendet.

Neben Wasserglas (Natriumsilikat-Lösung) können auch andere Silikate wie Kalium- oder Calciumsilikat verwendet werden, Als Säuerungsmittel können neben Schwefelsäure auch andere Säuerungsmittel wie HCl, $HNO_3$, $H_3PO_4$ oder $CO_2$ eingesetzt werden.

In Schritt d) wird die gefällte Kieselsäure zunächst filtriert und anschließend mit Wasser gewaschen und getrocknet. Dabei wird die Kieselsäure so lange gewaschen, bis der Gehalt an Natriumsulfat < 4 Gew.-% beträgt. Die Messung des Natriumsulfatgehalts kann nach dem dem Fachmann bekannten Verfahren, wie z. B. in der EP 0 754 650 A1 beschrieben, erfolgen.

Die Filtration und Lang- oder Kurzzeittrocknung der erfindungsgemäßen Kieselsäuren sind dem Fachmann geläufig und können z. B. in oben genannten Dokumenten nachgelesen werden.

Bevorzugt wird die fällungsgemäße Kieselsäure in einem Stromtrockner, Sprühtrockner, Elagentrockner, Bandtrockner, Drehrohrtrockner, Flash-Trockner, Spin-Flash-Trockner oder Düsenturm getrocknet. Diese Trocknungsvarianten schließen den Betrieb mit einem Atomizer, einer Ein- oder Zweistoffdüse oder einem integrierten Fließbett ein. Nach der Trocknung kann gegebenenfalls eine Vermahlung und/oder Granulation mit einem Walzenkompaktor durchgeführt werden. Bevorzugt weist die erfindungsgemäße Fällungskieselsäure nach dem Trockungsschritt oder der Vermahlung oder der Granulation eine Partikelform mit einem mittleren Durchmesser von über 15 µm, insbesondere über 80 µm besonders bevorzugt über 200 µm auf (Bestimmung gemäß ISO 2591-1, Dezember 1988). Besonders bevorzugt liegen die erfindungsgemäßen Fällungskieselsäuren im Form eines Pulvers mit einem mittleren Durchmesser über 15 µm oder in Form von im wesentlichen runden Partikeln mit einem mittleren Durchmesser über 80 µm (Micro Bead) oder in Form von Granulaten mit einem mittleren Durchmesser ≥ 1 mm vor.

Ein weitere Gegenstand der vorliegenden Erfindung ist die Verwendung der erfindungsgemäßen Fällungskieselsäure zur Herstellung von Elastomermischungen, vulkanisierbaren Kautschukmischungen und/oder sonstigen Vulkanisaten.

Ein weiterer Gegenstand der Erfindung sind Elastomermischungen, vulkanisierbaren Kautschukmischungen und/oder sonstige Vulkanisat, die die erfindungsgemäße Kieselsäure enthalten, wie beispielsweise Formkörper wie Luftreifen, Reifenlaufflächen, Kabelmäntel, Schläuche, Treibriemen, Förderbänder, Walzenbeläge, Reifen, Schuhsohlen, Dichtungsringe und Dämpfungselemente.

Weiterhin können die erfindungsgemäßen Kieselsäuren in allen Anwendungsgebieten verwendet werden, in denen üblicherweise Kieselsäuren eingesetzt werden, wie z. B. in Batterieseparatoren, als Anti-Blocking-Mittel, als Mattierungsmittel in Farben und Lacken, als Träger von Agrarprodukten und Nahrungsmitteln, in Beschichtungen, in Druckfarben, in Feuerlöschpulvern, in Kunststoffen, im Bereich Non impact printing, in Papiermasse, im Bereich Personal care und Spezialanwendungen.

Unter Verwendung im Bereich non impact printing, z. B. im Inkjet-Verfahren, ist die Verwendung der erfindungsgemäßen Kieselsäuren in

- Druckfarben zur Verdickung oder zum Verhindern von Spritzen und Abliegen,
- Papier als Füllstoff, Streichpigment, Lichtpauspapier, Thermopapier, Thermosublimation zur Verhinderung des Durchschlagens von Druckfarben, Verbesserung der Bildgrundruhe und Kontrast, Verbesserung der Punktschärfe und der Farbbrillianz zu verstehen.

Unter Verwendung im Bereich personal care ist die Verwendung der erfindungsgemäßen Kieselsäuren als Füllstoff oder Verdickungsmittel z. B. im Bereich der Pharmazie oder Körperpflege zu verstehen.

Optional kann die erfindungsgemäße Kieselsäure mit Silanen oder Organosilanen der Formeln 1 bis III modifiziert werden

$$[SiR^1_n(OR)_r(Alk)_m(Ar)_p]_q[B] \qquad (I),$$

$$SiR^1_n(OR)_{3-n}(Alkyl) \qquad (II),$$

oder

$$SiR^1_n(OR)_{3-n}(Alkenyl) \qquad (III),$$

in denen bedeuten

B: -SCN, -SH, -Cl, -NH$_2$, -OC(O)CHCH$_2$, -OC(O)C(CH$_3$)CH$_2$ (wenn q = 1) oder -S$_w$- (wenn q = 2), wobei B chemisch an Alk gebunden ist,

R und R$^1$: aliphatischer, olefinischer, aromatischer oder arylaromatischer Rest mit 2 - 30 C-Atomen, der optional mit den folgenden Gruppen substituiert sein kann: Hydroxy-, Amino-, Alkoholat-, Cyanid-, Thiocyanid-, Halogen-, Sulfonsäure-, Sulfonsäureester-, Thiol-, Benzoesäure-, Benzoesäureester-, Carbonsäure-, Carbonsäureester-, Acrylat-, Metacrylat-, Organosilanrest, wobei R und R$^1$ eine gleiche oder verschiedene Bedeutung oder Substituierung haben können.

n: 0, 1 oder 2,

Alk: einen zweiwertigen unverzweigten oder verzweigten Kohlenwasserstoffrest mit 1 bis 6 Kohlenstoffatomen,

m: 0 oder 1,

Ar: einen Arylrest mit 6 bis 12 C-Atomen, bevorzugt 6 C-Atomen, der mit den folgenden Gruppen substituiert sein kann: Hydroxy-, Amino-, Alkoholat-, Cyanid-, Thiocyanid-, Halogen-, Sulfonsäure-, Sulfonsäureester-, Thiol-, Benzoesäure-, Benzoesäureester-, Carbonsäure-, Carbonsäureester-, Organosilanrest.

p: 0 oder 1, mit der Maßgabe, dass p und n nicht gleichzeitig 0 bedeuten,

q: 1 oder 2,

w: eine Zahl von 2 bis 8,

r:        1, 2 oder 3, mit der Maßgabe, dass r + n + m + p = 4,

Alkyl:       einen einwertigen unverzweigten oder verzweigten gesättigten Kohlenwasserstoffrest mit 1 bis 20 Kohlenstoffatomen, bevorzugt 2 bis 8 Kohlenstoffatomen,

Alkenyl:      einen einwertigen unverzweigten oder verzweigten ungesättigten Kohlenwasserstoffrest mit 2 bis 20 Kohlenstoffatomen, bevorzugt 2 bis 8 Kohlenstoffatomen.

Auch kann die erfindungsgemäße Kieselsäure mit Siliciumorganischen Verbindungen der Zusammensetzung $SiR^2_{4-n}X_n$ (mit n = 1, 2, 3, 4), $[SiR^2_xX_yO]_z$ (mit $0 \leq x \leq 2$; $0 \leq y \leq 2$; $3 \leq z \leq 10$, mit x + y = 2), $[SiR^2_xX_yN]_z$ (mit $0 \leq x \leq 2$; $0 \leq y \leq 2$; $3 \leq z \leq 10$, mit x + y = 2), $SiR^2_nX_mOSiR^2_oX_p$ (mit $0 \leq n \leq 3$; $0 \leq m \leq 3$; $0 \leq o \leq 3$; $0 \leq p \leq 3$, mit n+m=3, o+p=3), $SiR^2_nX_mNSiR^2_oX_p$ (mit $0 \leq n \leq 3$; $0 \leq m \leq 3$; $0 \leq o \leq 3$; $0 \leq p \leq 3$, mit n+m=3, o+p=3), $SiR^2_nX_m[SiR^2_xX_yO]_zSiR^2_oX_p$ (mit $0 \leq n \leq 3$; $0 \leq m \leq 3$; $0 \leq x \leq 2$; $0 \leq y \leq 2$; $0 \leq 0 \leq 3$; $0 \leq p \leq 3$; $1 \leq z \leq 10000$, mit n + m = 3, x + y = 2, o + p = 3) modifiziert werden. Bei diesen Verbindungen kann es sich um lineare, cyclische und verzweigte Silan-, Silazan- und Siloxanverbindungen handeln. Bei $R^2$ kann es sich um substituierte und/oder unsubstituierte Alkyl- und/oder Arylreste mit 1 - 20 Kohlenstoffatomen handeln, welche mit funktionellen Gruppen wie der Hydroxygruppe, der Aminogruppe, Polyethern wie Ethylenoxid und/oder Propylenoxid und Halogenidgruppen wie Fluorid substituiert sein können. $R^2$ kann auch Gruppen wie Alkoxy-, Alkenyl-, Alkinyl- und Aryl-Gruppen und schwefelhaltige Gruppen enthalten. Bei X kann es sich um reaktive Gruppen wie Silanol-, Amino-, Thiol-, Halogen-, Alkoxy- Alkenylgruppen und einen Wasserstoff-Rest handeln.

Bevorzugt werden lineare Polysiloxane der Zusammensetzung $SiR^2_nX_m[SiR^2_xX_yO]_zSiR^2_oX_p$ (mit $0 \leq n \leq 3$; $0 \leq m \leq 3$; $0 \leq x \leq 2$; $0 \leq y \leq 2$; $0 \leq o \leq 3$; $0 \leq p \leq 3$; $1 \leq z \leq 10000$, mit n+m=3; x + y = 2; o + p = 3) verwendet, bei welchen $R^2$ bevorzugt durch Methyl repräsentiert wird.

Besonders bevorzugt werden Polysiloxane der Zusammensetzung $SiR^2_nX_m[SiR^2xX_yO]_zSiR^2_oX_p$ (mit $0 \leq n \leq 3$; $0 \leq m \leq 1$; $0 \leq x \leq 2$; $0 \leq y \leq 2$; $0 \leq o \leq 3$; $0 \leq p \leq 1$; $1 \leq z \leq 1000$, mit n+m=3, x + y = 2, o + p = 3) verwendet, bei welchen $R^2$ bevorzugt durch Methyl repräsentiert wird.

Die Modifizierung der optional granulierten, ungranulierten, vermahlenen und/oder unvermahlenen Fällungskieselsäure mit einem oder mehreren der genannten Organosilanen kann in Mischungen von 0.5 bis 50 Teilen, bezogen auf 100 Teile Fällungskieselsäure, insbesondere 1 bis 15 Teile, bezogen auf 100 Teile Fällungskieselsäure erfolgen, wobei die Reaktion zwischen Fällungskieselsäure und Organosilan während der Mischungsherstellung (in situ) oder außerhalb durch Aufsprühen und anschließendes Tempem der Mischung, durch Mischen des Organosilans und der Kieselsäuresuspension mit anschließender Trocknung und Temperung (zum Beispiel gemäß DE 3437473 und DE 19609619) oder gemäß des Verfahrens beschrieben in DE 19609619 oder DE-PS 4004781 durchgeführt werden kann.

Als Organosiliziumverbindungen eignen sich grundsätzlich alle bifunktionellen Silane, die einerseits eine Kopplung zu dem silanolgruppenhaltigen Füllstoff und andererseits eine Kopplung zum Polymer bewerkstelligen können. Übliche verwendete Mengen der Organosiliziumverbindungen sind 1 bis 10 Gew.-% bezogen, auf die Gesamtmenge an Fällungskieselsäure.

Beispiele für diese Organosiliziumverbindungen sind:
Bis(3-triethoxysilylpropyl)tetrasulfan, Bis(3-triethoxysilylpropyl)disulfan, Vinyltrimethoxysilan, Vinyltriethoxysilan, 3-Mercaptopropyltrimethoxysilan, 3-Mercaptopropyltriethoxysilan, 3-Aminopropyltrimethoxysilan, 3-Aminopropyltriethoxysilan. Weitere Organosiliziumverbindungen sind in WO 99/09036, EP 1108231, DE 10137809, DE 10163945, DE 10223658 beschrieben.

In einer bevorzugten Ausführungsform der Erfindung kann als Silan das Bis(triethoxysilylpropyl)tetrasulfan eingesetzt werden.

Die erfindungsgemäße Kieselsäure kann in Elastomerenmischungen, Reifen oder vulkanisierbaren Kautschukmischungen als Verstärkerfüllstoff in Mengen von 5 bis 200 Teilen, bezogen auf 100 Teile Kautschuk als Pulver, kugelförmiges Produkt oder Granulat sowohl mit Silanmodifizierung als auch ohne Silanmodifizierung eingemischt werden.

Kautschuk- und Elastomerenmischungen sind im Sinne der vorliegenden Erfindung als äquivalent zu betrachten.

Die Silanolgruppen auf der Kieselsäureoberfläche fungieren in Kautschuk-, bzw. in Gummimischungen als mögliche chemische Reaktionspartner mit einem Kopplungsreagens. Dieses ist zum Beispiel ein bifunktionelles Silan wie Bis(3-triethoxysilylpropyl)tetrasulfan, welches die Anbindung der Kieselsäure an die Kautschukmatrix ermöglicht. Durch eine möglichst hohe Anzahl an Silanolgruppen erreicht man also eine hohe Wahrscheinlichkeit einer Kopplung zwischen Kieselsäure und dem Kopplungsreagens und dadurch eine hohe Wahrscheinlichkeit der Anbindung der Kieselsäure an die Kautschukmatrix, was letztendlich zu einem höherem Verstärkungspotential führt. Die Searszahl $V_2$ ist ein Maß zur Beschreibung der Silanolgruppenanzahl der Kieselsäure, während die BET-Oberfläche einer Kieselsäure deren spezifische Oberfläche beschreibt, welche einen großen Einfluß auf das Verarbeitungsverhalten und andere gummitechnische Eigenschaften eines Compounds hat.

Die Angabe der absoluten Zahl der Silanolgruppen alleine reicht jedoch nicht aus, um eine Fällungskieselsäure hinreichend zu charakterisieren, da Fällungskieselsäuren mit hoher Oberfläche in der Regel eine höhere absolute Anzahl an Silanolgruppen aufweisen als Fällungskieselsäuren mit einer niedrigen Oberfläche. Wichtig ist daher der Quotienten aus Searszahl $V_2$/BET. So wird das durch die Silanolgruppen generierte Verstärkungspotential pro eingebrachter, spezifischer Oberflächeneinheit darstellbar.

Neben Mischungen, die ausschließlich die erfindungsgemäßen Kieselsäuren, mit und ohne den genannten Organosilanen, als Füllstoffe enthalten, können die Elastomeren- oder Kautschukmischungen zusätzlich mit einem oder mehreren mehr oder weniger verstärkenden Füllstoffen gefüllt sein.

Als weitere Füllstoffe können folgende Materialien eingesetzt werden:

-   Ruße: Die hierbei zu verwendenden Ruße sind nach dem Flammruß-, Furnace- oder Gasruß-Verfahren hergestellt und besitzen BET-Oberflächen von 20 bis 200 m²/g, wie z. B. SAF-, ISAF-, HSAF-, HAF-, FEF- oder GPF-Ruße. Die Ruße können gegebenenfalls auch Heteroatome wie zum Beispiel Silizium enthalten.
-   hochdisperse pyrogene. Kieselsäuren, hergestellt zum Beispiel durch Flammenhydrolyse von Siliziumhalogeniden. Die Kieselsäuren können gegebenenfalls auch als Mischoxide mit anderen Metalloxiden, wie Al-, Mg-,

Ca-, Ba-, Zn- und Titanoxiden vorliegen.

-   weitere kommerzielle Kieselsäuren
-   Synthetische Silicate, wie Aluminiumsilicat, Erdalkalisilicate wie Magnesiumsilicat oder Calciumsilicat, mit BET-Obertlächen von 20 bis 400 m²/g und Primärteilchendurchmessern von 10 bis 400 nm
-   Synthetische oder natürliche Aluminiumoxide und -hydroxide
-   Natürliche Silicate, wie Kaolin andere natürliche vorkommende Siliziumdioxidverbindungen
-   Glasfaser und Glasfaserprodukte (Matten, Stränge) oder Mikroglaskugeln
-   Stärke und modifizierte Stärketypen
-   Naturfüllstoffe, wie zum Beispiel Clays und Kieselkreide

Das Verschnittverhältnis richtet sich auch hier, wie bei der Dosierung der Organosilane, nach dem zu erzielenden Eigenschaftsbild der fertigen Gummimischung. Ein Verhältnis von 5 - 95 % zwischen den erfindungsgemäßen Kieselsäuren und den anderen oben genannten Füllstoffen (auch als Gemisch) ist denkbar und wird in diesem Rahmen auch realisiert

In einer besonders bevorzugten Ausführungsform können 10 bis 150 Gew.-Teile Kieselsäuren, ganz oder teilweise bestehend aus der erfindungsgemäßen Kieselsäure, gegebenenfalls zusammen mit 0 bis 100 Gew.-Teilen Ruß, sowie 1 bis 10 Gew.-Teile einer Organosiliziumverbindung, jeweils bezogen auf 100 Gew.-Teile Kautschuk, zur Herstellung der Mischungen eingesetzt werden.

Neben den erfindungsgemäßen Kieselsäuren, den Organosilanen und anderen Füllstoffen bilden die Elastomere einen weiteren wichtigen Bestandteil der Kautschukmischung. Zu nennen wären hierbei Elastomere, natürliche und synthetische, ölgestreckt oder nicht, als Einzelpolymer oder Verschnitt (Blend) mit anderen Kautschuken, wie zum Beispiel Naturkautschuke, Polybutadien (BR), Polyisopren (IR), Styrol/Butadien-Copolymerisate mit Styrolgehalten von 1 bis 60, vorzugsweise 2 bis 50 Gew.-% (SBR) insbesonders hergestellt mittels des Lösungspolymerisationsverfahrens, Butylkautschuke, Isobutylen/Isopren-Copolymerisate (IIR), Butadien/Acrylnitril-Copolymere mit Acrylnitrilgehalten von 5 bis 60, vorzugsweise 10 bis 50 Gew.-% (NBR), teilhydrierter oder vollständig hydrierter NBR-Kautschuk (HNBR), Ethylen/Propylen/Dien-Copolymerisate (EPDM), sowie Mischungen dieser Kautschuke.

Ferner kommen für Kautschukgemische mit den genannten Kautschuken die folgenden zusätzlichen Kautschuke in Frage: Carboxylkautschuke, Epoxidkautschuke, Trans-Polypentenamer, halogenierte Butylkautschuke, Kautschuke aus 2-Chlor-Butadien, EthylenVinylacetat-Copolymere, Ethylen-Propylen-Copolymere, gegebenenfalls auch chemische Derivate des Naturkautschuks sowie modifizierte Naturkautschuke.

Bevorzugte Synthesekautschuke sind beispielsweise bei W. Hofmann, "Kautschuk-technologie", Genter Verlag, Stuttgart 1980, beschrieben.

Für die Herstellung der erfindungsgemäßen Reifen sind insbesondere anionisch polymerisierte L-SBR-Kautschuke (Lösungs-SBR) mit einer Glasübergangstemperatur oberhalb von -50 °C sowie deren Mischungen mit Dienkautschuken von Interesse.

Die erfmdungsgemäßen Kieselsäuren, mit oder ohne Silan, können Einsatz in allen Gummianwendungen, wie zum Beispiel Formkörper, Reifen, Reifenlaufflächen, Fördergurte, Förderbänder, Dichtungen, Treibriemen, Schläuche, Schuhsohlen, Kabelmäntel, Walzenbeläge, Dämpfungselemente etc. finden.

Die Einarbeitung dieser Kieselsäure und die Herstellung der diese Kieselsäure enthaltenden Mischungen erfolgt in der in der Gummiindustrie üblichen Art und Weise auf einem Innenmischer oder Walzwerk bei bevorzugt 80 - 200 °C. Die Darreichungs- bzw. Einsatzform der Kieselsäuren kann sowohl als Pulver, kugelförmiges Produkt oder Granulat erfolgen. Auch hier unterscheiden sich die erfindungsgemäßen Kieselsäuren nicht von den bekannten hellen Füllstoffen.

Die erfindungsgemäßen Kautschukvulkanisate können weitere Kautschukhilfsstoue in den üblichen Dosierungen enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren, wie Triethanolamin, Polyethylenglykol, Hexantriol. Diese Verbindungen sind in der Kautschukindustrie bekannt.

Die Kautschukhilfsmittel können in bekannten Mengen, die sich unter anderem nach dem Verwendungszweck richten, eingesetzt werden. Übliche Mengen sind zum Beispiel Mengen von 0.1 bis 50 Gew.-%, bezogen auf den eingesetzten Kautschuk. Als Vernetzer können Schwefel oder schwefelspendende Substanzen eingesetzt werden. Die erfindungsgemäßen Kautschukmischungen können darüber hinaus Vulkanisationsbeschleuniger enthalten. Beispiele für geeignete Hauptbeschleuniger sind Mercaptobenzthiazole, Sulfenamide, Thiurame, Dithiocarbamate in Mengen von 0.5 bis 3 Gew.-%. Beispiele für Cobeschleuniger sind Guanidiene, Thioharnstoffe und Thiocarbonate in Mengen von 0.5 bis 5 Gew.-%. Schwefel kann üblicherweise in Mengen von 0.1 bis 10 Gew.-%, bevorzugt 1 bis 3 Gew.-%, bezogen auf den eingesetzten Kautschuk, eingesetzt werden.

Die erfindungsgemäßen Kieselsäuren können in Kautschuken eingesetzt werden, die mit Beschleunigern und/oder Schwefel, aber auch peroxidisch vernetzbar sind.

Die Vulkanisation der erfindungsgemäßen Kautschukmischungen kann bei Temperaturen von 100 bis 200 °C, bevorzugt 130 bis 180 °C, gegebenenfalls unter Druck von 10 bis 200 bar erfolgen. Die Abmischung der Kautschuke mit dem Füllstoff, gegebenenfalls Kautschukhilfsmitteln und der Organosiliziumverbindung kann in bekannten Mischaggregaten, wie Walzen, Innenmischern und Mischextrudem, durchgeführt werden.

Die erfindungsgemäßen Kautschukmischungen eignen sich zur Herstellung von Formkörpern, zum Beispiel für die Herstellung von Luftreifen, Reifenaufflächen für Sommer-, Winter- und Ganzjahresreifen, PKW-Reifen, Reifen für Nutzfahrzeuge, Motorradreifen, Reifenunterbauteilen, Kabelmänteln, Schläuchen, Treibriemen, Förderbändern, Walzenbelägen, Schuhsohlen, Dichtungsringen und Dämpfungselementen.

Die erfindungsgemäßen Kieselsäuren haben den Vorteil, dass sie den Kautschukvulkanisaten eine höhere Verstärkung und somit einen verbesserten Abriebwiderstand aufgrund der höheren Kautschukaktivität, gegenüber einer gleichen Kautschukmischung mit bisher bekannten Kieselsäuren, verleihen. Zudem zeigen sie sehr gute Dispersionen und auch Vorteile in der Vulkanisationszeit.

Die erfindungsgemäßen Kautschukmischungen sind insbesondere für die Herstellung von PKW-Reifenlaufflächen mit niedrigem Rollwiderstand oder guter Wintertauglichkeit geeignet. Ferner eignen sich die erfindungsgemäßen Kieselsäuren, ohne dem Zusatz von Organosiliziumverbindungen, im Blend mit einem typischen Laufflächenruß auch zur Verbesserung des Cut & Chip Verhaltes von Bau-, Landmaschinen- und Grubenreifen (Definition und weitere Ausführungen siehe "New insights into the tear mechanism" und Referenzen hierin, präsentiert auf der Tire Tech 2003 in Hamburg von Dr. W. Niedermeier).

Die Reaktionsbedingungen und die physikalisch/chemischen Daten der erfindungsgemäßen Fällungskieselsäuren werden mit den folgenden Methoden bestimmt:

### Bestimmung der Feuchte von Kieselsäuren

Nach dieser Methode werden in Anlehnung an ISO 787-2 die flüchtigen Anteile (im folgenden der Einfachheit halber Feuchte genannt) von Kieselsäure nach 2 stündiger Trocknung bei 105 °C bestimmt. Dieser Trocknungsverlust besteht im allgemeinen überwiegend aus Wasserfeuchtigkeit.

### Durchführung

In ein trockenes Wägeglas mit Schliffdeckel (Durchmesser 8 cm, Höhe 3 cm) werden 10 g der pulverförmigen, kugelförmigen oder granulären Kieselsäure auf 0.1 mg genau eingewogen (Einwaage E). Die Probe wird bei geöffnetem Deckel 2 h bei $105 \pm 2$ °C in einem Trockenschrank getrocknet. Anschließend wird das Wägeglas verschlossen und in einem Exsikkatorschrank mit Kieselgel als Trocknungsmittel auf Raumtemperatur abgekühlt. Die Auswaage A wird gravimetrisch bestimmt.

Man bestimmt die Feuchte in % gemäß ((E in g - A in g) * 100 %) / (E in g).

### Bestimmung der modifizierten Searszahl von Kieselsäuren

Durch die Titration von Kieselsäure mit Kaliumhydroxid-Lösung im Bereich von pH 6 bis pH 9 läßt sich die modifizierte Searszahl (im folgenden Searszahl $V_2$ genannt) als Maß für die Zahl an freien Hydroxy-Gruppen bestimmen.

Der Bestimmungsmethode liegen die folgenden chemischen Reaktionen zu Grunde, wobei "Si"-OH eine Silanolgruppe der Kieselsäure symbolisieren soll:

"Si"-OH + NaCl $\rightarrow$ "Si"-ONa + HCl

HCl + KOH $\rightarrow$ KCl + $H_2$O.

**Durchführung**

10.00 g einer pulverförmigen, kugelförmigen oder granulären Kieselsäure mit 5 $\pm$ 1 % Feuchte werden 60 Sekunden mit einer IKA-Universalmühle M 20 (550 W; 20 000 U/min) zerkleinert. Gegebenenfalls muß der Feuchtegehalt der Ausgangssubstanz durch Trocknen bei 105 °C im Trockenschrank oder gleichmäßiges Befeuchten eingestellt und die Zerkleinerung wiederholt werden. 2.50 g der so behandelten Kieselsäure werden bei Raumtemperatur in ein 250 ml Titriergefäß eingewogen und mit 60.0 ml Methanol p. A. versetzt. Nach vollständiger Benetzung der Probe werden 40.0 ml entionisiertes Wasser zugegeben und man dispergiert mittels eines Ultra Turrax T 25 Rührers (Rührwelle KV-18G, 18 mm Durchmesser) 30 Sekunden lang bei einer Drehzahl von 18 000 U/min. Mit 100 ml entionisiertem Wasser werden die am Gefäßrand und Rührer anhaftenden Probepartikel in die Suspension gespült und in einem thermostatisiertem Wasserbad auf 25 °C temperiert.

Das pH-Messgerät (Fa. Knick, Typ: 766 pH-Meter Calimatic mit Temperaturfühler) und die pH-Elektrode (Einstabmesskette der Fa. Schott, Typ N7680) werden unter Verwendung von Pufferlösungen (pH 7.00 und 9.00) bei Raumtemperatur kalibriert. Mit dem pH-Meter wird zunächst der Ausgangs-pH-Wert der Suspension bei 25 °C gemessen, danach wird je nach Ergebnis mit Kaliumhydroxid-Lösung (0.1 mol/l) bzw. Salzsäurelösung (0.1 mol/l) der pH-Wert auf 6.00 eingestellt. Der Verbrauch an KOH- bzw. HCl-Lösung in ml bis pH 6.00 entspricht $V_1$'.

Danach werden 20.0 ml Natriumchlorid-Lösung (250.00 g NaCl p.A. mit entionisiertem Wasser auf 11 aufgefüllt) zudosiert. Mit 0.1 mol/l KOH wird dann die Titration bis zum pH-Wert 9.00 fortgesetzt. Der Verbrauch an KOH-Lösung in ml bis pH 9.00 entspricht $V_2$'.

Anschliessend werden die Volumina $V_1$', bzw. $V_2$' zunächst auf die theoretische Einwaage von 1 g normiert und mit 5 erweitert, woraus sich $V_1$ und die Searszahl $V_2$ in den Einheiten ml/(5 g) ergeben.

**Bestimmung der BET-Oberfläche**

Die spezifische Stickstoff-Oberfläche (im folgenden BET-Oberfläche genannt) der pulverförmigen, kugelförmigen oder granulären Kieselsäure wird gemäß ISO 5794-1/Annex D mit einem AREA-meter (Fa. Ströhlein, JUWE) bestimmt.

**Bestimmung der CTAB-Oberfläche**

Die Methode beruht auf der Adsorption von CTAB (N-Hexadecyl-N,N,N-trimethylammoniumbromid) an der "äußeren" Oberfläche der Kieselsäure, die auch als "kautschukwirksame Oberfläche" bezeichnet wird, in Anlehnung an die ASTM 3765, bzw. NFT 45-007 (Kapitel 5.12.1.3). Die Adsorption von CTAB erfolgt in wässriger Lösung unter Rühren und Ultraschallbehandlung. Überschüssiges, nicht adsorbiertes CTAB wird durch Rücktitration mit NDSS (Dioctylnatriumsulfosuccinat-Lösung, "Aerosol OT"-Lösung) mit einem Titroprozessor ermittelt, wobei der Endpunkt durch das Maximum der Trübung der Lösung gegeben ist und mit einer Phototrode bestimmt wird. Die Temperatur während aller durchgeführten Operationen beträgt 23-25 °C um das Auskristallisieren von CTAB zu verhindern. Der Rücktitration liegt die folgende Reaktionsgleichung zu Grunde:

$$(C_{20}H_{37}O_4)SO_3Na + BrN(CH_3)_3(C_{16}H_{33}) \rightarrow (C_{20}H_{37}O_4)SO_3N(CH_3)_3(C_{16}H_{33}) + NaBr \quad NDSS \quad CTAB$$

**Geräte**

Titroprozessor METTLER Toledo Typ DL 55 und Titroprozessor METTLER Toledo Typ DL 70, jeweils ausgerüstet mit: pH-Elektrode, Fabrikat Mettler, Typ DG 111 und Phototrode, Fabrikat Mettler, Typ DP 550
Titrierbecher 100 ml aus Polypropylen
Titrierglasgefäß, 150 ml mit Deckel
Druckfiltrationsgerät, 100 ml Inhalt
Membranfilter aus Cellulosenitrat, Porengröße 0.1 $\mu$m, 47 mm Ø, z. B. Whatman (Best. Nr. 7181-004)

**Reagenzien**

Die Lösungen von CTAB (0.015 mol/l in entionisiertem Wasser) und NDSS (0.00423 mol/l in entionisiertem Wasser) werden gebrauchsfertig bezogen (Fa. Kraft, Duisburg: Bestell-Nr. 6056.4700 CTAB-Lösung 0.015 mol/l; Bestell-Nr. 6057.4700 NDSS-Lösung 0.00423 mol/l), bei 25 °C aufbewahrt und innerhalb von einem Monat aufgebraucht.

**Durchführung**

**Blindtitration**

Der Verbrauch an NDSS-Lösung zur Titration von 5 ml CTAB-Lösung ist 1 x täglich vor jeder Meßreihe zu prüfen. Dazu wird die Phototrode vor Beginn der Titration auf 1000 ± 20 mV eingestellt (entsprechend einer Transparenz von 100 %).

Es werden genau 5.00 ml CTAB-Lösung in einen Titrierbecher pipettiert und man fügt 50.0 ml entionisiertes Wasser hinzu. Unter Rühren erfolgt die Titration mit NDSS-Lösung nach der dem Fachmann geläufigen Meßmethode mit dem Titroprozessor DL 55 bis zur max. Trübung der Lösung. Man bestimmt den Verbrauch $V_1$ an NDSS-Lösung in ml. Jede Titration ist als Dreifachbestimmung auszuführen.

**Adsorption**

10.0 g der pulverfönnigen, kugelförmigen oder granulierten Kieselsäure mit einem Feuchtegehalt von 5 ± 2 % (gegebenenfalls wird der Feuchtegehalt durch Trocknen bei 105 °C im Trockenschrank oder gleichmäßiges Befeuchten eingestellt) werden mit einer Mühle (Fa. Krups, Model KM 75, Artikel Nr. 2030-70) 30 Sekunden lang zerkleinert. Genau 500.0 mg der zerkleinerten Probe werden in ein 150 ml Titriergefäß mit Magnetrührstäbchen überführt und es werden genau 100.0 ml CTAB-Lösung zudosiert. Das Titriergefäß wird mit einem Deckel verschlossen und 15 Minuten mit einem Magnetrührer gerührt. Hydrophobe Kieselsäuren werden mit einem Ultra Turrax T 25 Rührer (Rührwelle KV-18G, 18 mm Durchmesser) bei 18 000 U/min maximal 1 min lang bis zur vollständigen Benetzung gerührt. Das Titriergefäß wird an den Titroprozessor DL 70 geschraubt und der pH-Wert der Suspension wird mit KOH (0.1 mol/l) auf einen Wert von 9 ± 0.05 eingestellt. Es erfolgt eine 4 minütige Beschallung der Suspension in dem Titriergefäß in einem Ultraschallbad (Fa. Bandelin, Sonorex RK 106 S, 35 kHz) bei 25 °C. Anschließend erfolgt eine umgehende Druckfiltration durch einen Membranfilter bei einem Stickstoffdruck von 1.2 bar. Der Vorlauf von 5 ml wird verworfen.

**Titration**

5.00 ml des übrigen Filtrats werden in einen 100 ml Titrierbecher pipettiert und mit entionisiertem Wasser auf 50.00 ml aufgefüllt. Der Titrierbecher wird an den Titroprozessor DL 55 geschraubt und unter Rühren erfolgt die Titration mit NDSS-Lösung bis zur maximalen Trübung. Man bestimmt den Verbrauch $V_{II}$ an NDSS-Lösung in ml. Jede Trübung ist als Dreifachbestimmung auszuführen.

**Berechnung**

Mit Hilfe der Meßwerte

$V_I$ = Verbrauch an NDSS-Lösung in ml bei der Titration der Blindprobe
$V_{II}$ = Verbrauch an NDSS-Lösung in ml bei Verwendung des Filtrats

ergibt sich:

$V_I/V_{II}$ = Stoffmenge CTAB der Blindprobe / noch vorhandene Stoffmenge CTAB in der Filtratprobe.

Daraus folgt für die adsorbierte Stoffmenge N an CTAB in g:

$$N = ((V_1 - V_{II}) * 5.5 \text{ g} * 5 \text{ ml}) / (V_I * 1000 \text{ ml}).$$

Da von 100 ml Filtrat nur 5 ml titriert wurden, 0.5 g Kieselsäure einer definierten Feuchte eingesetzt wurden und der Platzbedarf von 1 g CTAB $578435 * 10^{-3}$ m$^2$ beträgt, folgt daraus: CTAB-Oberfläche (nicht wasserkorrigiert) in

$m^2/g$ = (N * 20 * 578.435 $m^2/g$) / (0.5 g) und CTAB-Oberfläche (nicht wasserkorrigiert) in $m^2/g$ = (($V_I$ - $V_{II}$) * 636.2785 $m^2/g$) / $V_I$.

Die CTAB-Oberfläche wird auf die wasserfreie Kieselsäure bezogen, weshalb die folgende Korrektur durchgeführt wird.

$$\text{CTAB-Oberfläche in m}^2/g = (\text{CTAB-Oberfläche (nicht wasserkorrigiert) in m}^2/g \ * \ 100 \ \%) \ / $$

$$(100 \ \% - \text{Feuchte in } \%).$$

## Bestimmung der DBP-Aufnahme

Die DBP-Aufnahme (DBP-Zahl), die ein Maß für die Saugfähigkeit der Fällungskieselsäure ist, wird in Anlehnung an die Norm DIN 53601 wie folgt bestimmt:

## Durchführung

12.50 g pulverförmige oder kugelförmige Kieselsäure mit 0 - 10 % Feuchtegehalt (gegebenenfalls wird der Feuchtegehalt durch Trocknen bei 105 °C im Trockenschrank eingestellt) werden in die Kneterkammer (Artikel Nummer 279061) des Brabender-Absorptometer "E" gegeben (ohne Dämpfung des Ausgangsfilters des Drehmomentaufnehmers). Im Falle von Granulaten wird die Siebfraktion von 3.15 bis 1 mm (Edelstahlsiebe der Fa. Retsch) verwendet (durch sanftes Drücken der Granulate mit einem Kunststoffspatel durch das Sieb mit 3.15 mm Porenweite). Unter ständigem Mischen (Umlaufgeschwindigkeit der Kneterschaufeln 125 U/min) tropft man bei Raumtemperatur durch den "Dosimaten Brabender T 90/50" Dibutylphthalat mit einer Geschwindigkeit von 4 ml/min in die Mischung. Das Einmischen erfolgt mit nur geringem Kraftbedarf und wird anhand der Digitalanzeige verfolgt. Gegen Ende der Bestimmung wird das Gemisch pastös, was mittels eines steilen Anstieges des Kraftbedarfs angezeigt wird. Bei einer Anzeige von 600 digits (Drehmoment von 0.6 Nm) wird durch einen elektrischen Kontakt sowohl der Kneter als auch die DBP-Dosierung abgeschaltet. Der Synchronmotor für die DBP-Zufuhr ist mit einem digitalen Zählwerk gekoppelt, so dass der Verbrauch an DBP in ml abgelesen werden kann.

## Auswertung

Die DBP-Aufnahme wird in g/(100 g) angegeben und anhand der folgenden Formel aus dem gemessenen DBP-Verbrauch berechnet. Die Dichte von DBP beträgt bei 20 °C typischer Weise 1.047 g/ml.

$$\text{DBP-Aufnahme in } g/(100 \ g) = ((\text{Verbrauch an DBP in ml}) \ * \ (\text{Dichte des DBP in } g/ml)$$

$$* \ 100) \ / \ (12.5 \ g).$$

Die DBP-Aufnahme ist für die wasserfreie, getrocknete Kieselsäure definiert. Bei Verwendung von feuchten Fällungskieselsäuren ist der Wert mittels derfolgenden Korrekturtabelle zu korrigieren. Der Korrekturwert entsprechend dem Wassergehalt wird zu dem experimentell bestimmten DBP-Wert addiert; z. B. würde ein Wassergehalt von 5.8 % einen Zuschlag von 33 g/(100 g) für die DBP-Aufnahme bedeuten.

**Korrekturtabelle für Dibutylphthalataufnahme -wasserfrei-**

| % Wasser | .% Wasser | | | | |
|---|---|---|---|---|---|
| | .0 | .2 | .4 | .6 | .8 |
| 0 | 0 | 2 | 4 | 5 | 7 |
| 1 | 9 | 10 | 12 | 13 | 15 |
| 2 | 16 | 18 | 19 | 20 | 22 |
| 3 | 23 | 24 | 26 | 27 | 28 |
| 4 | 28 | 29 | 29 | 30 | 31 |

(fortgesetzt)

|  | .%Wasser | | | | |
|---|---|---|---|---|---|
| 5 | 31 | 32 | 32 | 33 | 33 |
| 6 | 34 | 34 | 35 | 35 | 36 |
| 7 | 36 | 37 | 38 | 38 | 39 |
| 8 | 39 | 40 | 40 | 41 | 41 |
| 9 | 42 | 43 | 43 | 44 | 44 |
| 10 | 45 | 45 | 46 | 46 | 47 |

### pH-Wert-Bestimmung

Das Verfahren in Anlehnung an DIN EN ISO 787-9 dient zur Bestimmung des pH-Wertes einer wässrigen Suspension von Kieselsäuren bei 20 °C. Dazu wird eine wässrige Suspension der zu untersuchenden Probe hergestellt. Nach kurzzeitigem Schütteln der Suspension wird deren pH-Wert mittels eines zuvor kalibrierten pH-Meters bestimmt.

### Durchführung

Vor der Durchführung der pH-Messung ist das pH-Messgerät (Fa. Knick, Typ: 766 pH-Meter Calimatic mit Temperaturfühler) und die pH-Elektrode (Einstabmesskette der Fa. Schott, Typ N7680) täglich unter Verwendung der Pufferlösungen bei 20 °C zu kalibrieren. Die Kalibrierungsfunktion ist so zu wählen, dass die zwei verwendeten Pufferlösungen den erwarteten pH-Wert der Probe einschließen (Pufferlösungen mit pH 4.00 und 7.00, pH 7.00 und pH 9.00 und ggf. pH 7.00 und 12.00). Bei Verwendung von Granulaten werden zunächst 20.0 g Kieselsäure mittels einer Mühle (Fa. Krups, Modell KM 75, Artikel Nr. 2030-70) 20 s lang zerkleinert.

5.00 g pulverförmige oder kugelförmigen Kieselsäure mit 5 ± 1 % Feuchtegehalt (gegegebenfalls wird der Feuchtegehalt durch Trocknen bei 105 °C im Trockenschrank oder gleichmäßiges Befeuchten vor der evtl. Zerkleinerung eingestellt) werden auf einer Präzisionswaage auf 0.01 g genau in eine zuvor tarierte Glas-Weithalsflasche eingewogen. 95.0 ml entionisiertes Wasser werden zu der Probe gegeben. Anschließend wird die Suspension im verschlossenen Gefäß für die Dauer von 5 Minuten mittels einer Schüttelmaschine (Fa. Gerhardt, Modell LS10, 55 W, Stufe 7) bei Raumtemperatur geschüttelt. Die Messung des pH-Wertes erfolgt direkt im Anschluss an das Schütteln. Dazu wird die Elektrode zunächst mit entionisierten Wasser, nachfolgend mit einem Teil der Suspension abgespült und anschließend in die Suspension eingetaucht. Nach Zugabe eines Magnetfisches in die Suspension wird bei einer konstanten Rührgeschwindigkeit mit leichter Trombenbildung der Suspension die pH-Messung durchgeführt. Wenn das pH-Meter einen gleichbleibenden Wert anzeigt, wird der pH-Wert an der Anzeige abgelesen.

Bei der Verwendung von hydrophober Kieselsäure erfolgt die Durchführung analog, allerdings werden dann 5.00 g der evtl. zerkleinerten Probe mit 5 ± 1 % Feuchtegehalt auf der Präzisionswaage auf 0.01 g genau in eine zuvor tarierte Glas-Weithalsflasche eingewogen. Es werden 50.0 ml Methanol p. A. und 50.0 ml entionisiertes Wasser hinzugegeben und anschließend wird die Suspension im verschlossenen Gefäß für die Dauer von 5 Minuten mittels einer Schüttelmaschine (Fa. Gerhardt, Modell LS10, 55 W, Stufe 7) bei Raumtemperatur geschüttelt. Die Messung des pH-Wertes erfolgt ebenfalls unter Rühren, allerdings nach exakt 5 min.

### Bestimmung des Feststoffgehalts von Filterkuchen

Nach dieser Methode wird der Feststoffgehalt von Filterkuchen durch Entfernen der flüchtigen Anteile bei 105 °C bestimmt.

### Durchführung

In eine trockene, tarierte Porzellanschale (Durchmesser 20 cm) werden 100.00 g des Filterkuchens eingewogen (Einwaage E). Gegebenenfalls wird der Filterkuchen mit einem Spatel zerkleinert, um lockere Brocken von maximal 1 cm$^3$ zu erhalten. Die Probe wird bei 105 ± 2 °C in einem Trockenschrank bis zur Gewichtskonstanz getrocknet. Anschließend wird die Probe in einem Exsikkatorschrank mit Kieselgel als Trocknungsmittel auf Raumtemperatur abgekühlt. Die Auswaage A wird gravimetrisch bestimmt.

Man bestimmt die Feststoffgehalt in % gemäß 100 % - (((E in g - A in g) * 100 %) / (E in g)).

**Bestimmung der elektrischen Leitfähigkeit**

Die Bestimmung der elektrischen Leitfähigkeit (LF) von Kieselsäuren wird in wässriger Suspension durchgeführt.

**Durchführung**

Bei Verwendung von Granulaten werden zunächst 20.0 g Kieselsäure mittels einer Mühle (Fa. Krups, Modell KM 75, Artikel Nr. 2030-70) 20 s lang zerkleinert. 4.00 g pulverförmige oder kugelförmige Kieselsäure mit 5 $\pm$ 1 % Feuchtegehalt (gegebenenfalls wird der Feuchtegehalt durch Trocknen bei 105 °C im Trockenschrank oder gleichmäßiges Befeuchten vor der evtl. Zerkleinerung eingestellt) werden in 50.0 ml entionisiertem Wasser suspendiert und 1 min auf 100 °C erhitzt. Die auf 20 °C abgefühlte Probe wird auf genau 100 ml aufgefüllt und durch Umschütteln homogenisiert.

Die Meßzelle des Leitfähigkeitsmeßgeräts LF 530 (Fa. WTW) wird mit einer kleinen Probenmenge gespült, bevor die Meßzelle LTA01 in die Suspension getaucht wird. Der am Display angezeigte Wert entspricht der Leitfähigkeit bei 20 °C, da der externe Temperaturfühler TFK 530 eine automatische Temperaturkompensation durchfuhrt. Dieser Temperaturkoeffizient als auch die Zellenkonstante k sind vor jeder Meßreihe zu überprüfen.

Als Kalibrierlösung wird 0.01 mol/l Kaliumchlorid-Lösung verwendet (LF bei 20 °C = 1278 $\mu$S/cm).

**Bestimmung des Feststoffgehalts von Fällsuspensionen**

Der Feststoffgehalt der Fällsuspension wird gravimetrisch nach Filtration der Probe bestimmt.

**Durchführung**

100.0 ml der homogenisierten Fällsuspension ($V_{Suspension}$) werden bei Raumtemperatur mit Hilfe eines Messzylinders abgemessen. Die Probe wird über einen Rundfilter (TYP 572, Fa. Schleicher & Schuell) in einer Porzellannutsche abgenutscht, aber nicht trockengesaugt, um Rißbildung des Filterkuchens zu verhindern. Anschließend wäscht man den Filterkuchens mit 100.0 ml entionisertem Wasser. Der ausgewaschene Filterkuchen wird komplett abgenutscht, in eine tarierte Porzellanschale überführt und bei 105 $\pm$ 2 °C in einem Trockenschrank bis zur Gewichtskonstanz getrocknet. Das Gewicht der getrockneten Kieselsäure ($m_{Probe}$) wird ermittelt. Der Feststoffgehalt bestimmt sich gemäß:

$$\text{Feststoffgehalt in g/l} = (m_{Probe} \text{ in g}) / (V_{Suspension} \text{ in l}).$$

**Bestimmung der Alkalizahl**

Als Alkalizahl-Bestimmung (AZ), versteht man den Verbrauch an Salzsäure in ml (bei 50 ml Probevolumen, 50 ml dest. Wasser und einer verwendeten Salzsäure der Konzentration 0.5 mol/l) bei einer direkten potentiometrischen Titration von alkalischen Lösungen, bzw. Suspensionen bis zu einem pH-Wert von 8.30. Man erfasst hiermit den freien Alkaligehalt der Lösung bzw. Suspension.

Durchführung

Das pH-Gerät (Fa. Knick, Typ: 766 pH-Meter Calimatic mit Temperaturfühler) und die pH-Elektrode (Einstabmesskette der Fa. Schott, Typ N7680) wird mit Hilfe zweier Pufferlösungen (pH = 7.00 und pH = 10.00) bei Raumtemperatur kalibriert. Die Einstabmesskette wird in die auf 40 °C temperierte Meßlösung bzw. -suspension bestehend aus 50.0 ml Probe und 50.0 ml entionisiertem Wasser getaucht. Anschließend gibt man tropfenweise Salzsäure-Lösung der Konzentration 0.5 mol/l hinzu, bis sich ein konstanter pH-Wert von 8.30 einstellt. Auf Grund des sich erst langsam einstellenden Gleichgewichts zwischen der Kieselsäure und dem freien Alkaligehalt bedarf es einer Wartezeit von 15 min bis zu einem endgültigen Ablesen des Säureverbrauchs. Bei den gewählten Stoffmengen und Konzentrationen entspricht der abgelesene Salzsäureverbrauch in ml direkt der Alkalizahl, welche dimensionslos angegeben wird.

Die folgenden Beispiele sollen die Erfindung näher erläutern, ohne ihren Umfang zu beschränken.

**Beispiel 1 Herstellung der Kieselsäuren**

**Beispiel 1.1**

In einem Reaktor aus rostfreiem Edelstahl mit Propellerrührsystem und Doppelmantelheizung werden 1550 1 Wasser sowie 141.4 kg Wasserglas (Dichte 1.348 kg/l, 27.0 % $SiO_2$, 8.05 % $Na_2O$) vorgelegt.

Anschließend werden unter starken Rühren bei 92 °C für 80 Minuten 5.505 kg/min des oben genannten Wasserglases und ca. 0.65 kg/min Schwefelsäure (Dichte 1.83 kg/l, 96 % $H_2SO_4$) zudosiert. Diese Schwefelsäuredosierung wird so geregelt, dass in dem Reaktionsmedium eine AZ-Zahl von 20 herrscht. Anschließend wird die Wasserglaszugabe gestoppt und die Schwefelsäure weiterzugeführt, bis ein pH-Wert von 5.0 (gemessen bei Raumtemperatur) erreicht ist.

Die erhaltene Suspension wird mit einer Membranfilterpresse filtriert und mit Wasser gewaschen. Der Filterkuchen mit 21 % Feststoffgehalt wird mit wässriger Schwefelsäure und einem Scheraggregat verflüssigt. Die Kieselsäurespeise mit 18 % Feststoffgehalt und einem pH-Wert von 4.0 wird anschliessend unter Ammoniakdosierung düsenturmgetrocknet.

Das erhaltene Micro Bead Produkt weist eine BET-Oberfläche von 123 m$^2$/g und eine CTAB-Oberfläche von 119 m$^2$/g auf.

**Beispiel 1.2**

In einem Reaktor aus rostfreiem Edelstahl mit Propellerrührsystem und Doppelmantelheizung werden 1550 1 Wasser sowie 141.4 kg Wasserglas (Dichte 1.348 kg/l, 27.0 % $SiO_2$, 8.05 % $Na_2O$) vorgelegt.

Anschließend werden unter starken Rühren bei 88.5 °C für 80 Minuten 5.505 kg/min des oben genannten Wasserglases und ca. 0.65 kg/min Schwefelsäure (Dichte 1.83 kg/l, 96 % $H_2SO_4$) zudosiert. Diese Schwefelsäuredosierung wird so geregelt, dass in dem Reaktionsmedium eine AZ-Zahl von 20 herrscht. Anschließend wird die Wasserglaszugabe gestoppt und die Schwefelsäure weiterzugeführt, bis ein pH-Wert von 4.5 (gemessen bei Raumtemperatur) erreicht ist.

Die erhaltene Suspension wird mit einer Membranfilterpresse filtriert und mit Wasser gewaschen. Der Filterkuchen mit 19 % Feststoffgehalt wird mit wässriger Schwefelsäure und einem Scheraggregat verflüssigt. Die Kieselsäurespeise mit 17 % Feststoffgehalt und einem pH-Wert von 3.0 wird anschliessend unter Ammoniakdosierung düsenturmgetrocknet.

Das erhaltene Micro Bead Produkt weist eine BET-Oberfläche von 168 m$^2$/g und eine CTAB-Oberfläche von 148 m$^2$/g auf.

**Beispiel 1.3**

In einem Reaktor aus rostfreiem Edelstahl mit Propellerrührsystem und Doppelmantelheizung werden 1550 1 Wasser sowie 141.4 kg Wasserglas (Dichte 1.348 kg/l, 27.0 % $SiO_2$, 8.05 % $Na_2O$) vorgelegt.

Anschließend werden unter starken Rühren bei 93 °C für 80 Minuten 5.505 kg/min des oben genannten Wasserglases und ca. 0.65 kg/min Schwefelsäure (Dichte 1.83 kg/l, 96 % $H_2SO_4$) zudosiert. Diese Schwefelsäuredosierung wird so geregelt, dass in dem Reaktionsmedium eine AZ-Zahl von 20 herrscht. Anschließend wird die Wasserglaszugabe gestoppt und die . Schwefelsäure weiterzugeführt, bis ein pH-Wert von 5.0 (gemessen bei Raumtemperatur) erreicht ist.

Die erhaltene Suspension wird mit einer Membranfilterpresse filtriert und mit Wasser gewaschen. Der Filterkuchen mit 21 % Feststoffgehalt wird mit wässriger Schwefelsäure und einem Scheraggregat verflüssigt. Die Kieselsäurespeise mit 18 % Feststoffgehalt und einem pH-Wert von 4.0 wird anschliessend unter Ammoniakdosierung sprühgetrocknet und walzengranuliert.

Das erhaltene granuläre Produkt weist eine BET-Oberfläche von 126 m$^2$/g und eine CTAB-Oberfläche von 118 m$^2$/g auf.

**Beispiel 1.4**

In einem Reaktor aus rostfreiem Edelstahl mit Propellerrührsystem und Doppelmantelheizung werden 1550 1 Wasser sowie 141.4 kg Wasserglas (Dichte 1.348 kg/l, 27.0 % $SiO_2$, 8.05 % $Na_2O$) vorgelegt.

Anschließend werden unter starken Rühren bei 92 °C für 100 Minuten 5.505 kg/min des oben genannten Wasserglases und ca. 0.65 kg/min Schwefelsäure (Dichte 1.83 kg/l, 96 % $H_2SO_4$) zudosiert. Diese Schwefelsäuredosierung wird so geregelt, dass in dem Reaktionsmedium eine AZ-Zahl von 20 herrscht. Anschließend wird die Wasserglaszugabe gestoppt und die Schwefelsäure weiterzugeführt, bis ein pH-Wert von 5.0 (gemessen bei Raumtemperatur) erreicht ist.

Die erhaltene Suspension wird mit einer Membranfilterpresse filtriert und mit Wasser gewaschen. Der Filterkuchen mit 22 % Feststoffgehalt wird mit wässriger Schwefelsäure und einem Scheraggregat verflüssigt. Die Kieselsäurespeise mit 19 % Feststoffgehalt und einem pH-Wert von 3.8 wird anschliessend unter Ammoniakdosierung sprühgetrocknet und walzengranuliert.

Das erhaltene granuläre Produkt weist eine BET-Oberfläche von 130 $m^2$/g und eine CTAB-Oberfläche von 113 $m^2$/g auf.

**Beispiel 1.5**

In einem Reaktor aus rostfreiem Edelstahl mit Propellerrührsystem und Doppelmantelheizung werden 1550 1 Wasser sowie 141.4 kg Wasserglas (Dichte 1.348 kg/l, 27.0 % $SiO_2$, 8.05 % $Na_2O$) vorgelegt.

Anschließend werden unter starken Rühren bei 92.0 °C für 100 Minuten 5.505 kg/min des oben genannten Wasserglases und ca. 0.65 kg/min Schwefelsäure (Dichte 1.83 kg/l, 96 % $H_2SO_4$) zudosiert. Diese Schwefelsäuredo-sierung wird so geregelt, dass in dem Reaktionsmedium eine AZ-Zahl von 20 herrscht. Anschließend wird die Wasserglaszugabe gestoppt und die Schwefelsäure weiterzugeführt, bis ein pH-Wert von 5.0 (gemessen bei Raumtemperatur) erreicht ist.

Die erhaltene Suspension wird mit einer Membranfilterpresse filtriert und mit Wasser gewaschen. Der Filterkuchen mit 21 % Feststoffgehalt wird mit wässriger Schwefelsäure und einem Scheraggregat verflüssigt. Die Kieselsäurespeise mit 19 % Feststoffgehalt und einem pH-Wert von 4.0 wird anschliessend unter Ammoniakdosierung düsenturmgetrocknet.

Das erhaltene Micro Bead Produkt weist eine BET-Oberfläche von 110 $m^2$/g und eine CTAB-Oberfläche von 108 $m^2$/g auf.

**Beispiel 1.6**

In einem Reaktor aus rostfreiem Edelstahl mit Propellerrührsystem und Doppelinantelheizung werden 1550 1 Wasser sowie 141.4 kg Wasserglas (Dichte 1.348 kg/l, 27.0 % $SiO_2$, 8.05 % $Na_2O$) vorgelegt.

Anschließend werden unter starken Rühren bei 88.0 °C für 100 Minuten 5.505 kg/min des oben genannten Wasserglases und ca. 0.65 kg/min Schwefelsäure (Dichte 1.83 kg/l, 96 % $H_2SO_4$) zudosiert. Diese Schwefelsäuredo-sierung wird so geregelt, dass in dem Reaktionsmedium eine AZ-Zahl von 20 herrscht. Anschließend wird die Wasserglaszugabe gestoppt und die Schwefelsäure weiterzugeführt, bis ein pH-Wert von 5.0 (gemessen bei Raumtemperatur) erreicht ist.

Die erhaltene Suspension wird mit einer Membranfilterpresse filtriert und mit Wasser gewaschen. Der Filterkuchen mit 22 % Feststoffgehalt wird mit wässriger Schwefelsäure und einem Scheraggregat verflüssigt. Die Kieselsäurespeise mit 20 % Feststoffgehalt und einem pH-Wert von 3.0 wird anschliessend unter Ammoniakdosierung düsenturmgetrocknet.

Das erhaltene Micro Bead Produkt weist eine BET-Oberfläche von 143 $m^2$/g und eine CTAB-Oberfläche von 131 $m^2$/g auf.

Weitere physikalisch chemische Daten der oben genannten Kieselsäuren sind in der folgenden Tabelle zusammengefasst.

| Kieselsäure aus Beispiel-Nr. | BET | CTAB | DBP | Feuchte | pH | Leitfähigkeit | Searszahl $V_2$ | Searszahl $V_2$/BET |
|---|---|---|---|---|---|---|---|---|
| | [$m^2$/g] | [$m^2$/g] | [g/ (100g)] | [%] | [-] | [$\mu$S/cm] | [ml/(5 g)] | [ml/(5 $m^2$)] |
| 1.1 | 123 | 119 | 272 | 4.8 | 5.6 | 610 | 24 | 0.195 |
| 1.2 | 168 | 148 | 265 | 5.5 | 6.0 | 700 | 26 | 0.155 |
| 1.3 | 126 | 118 | 207 | 5.1 | 5.1 | 810 | 22 | 0.175 |
| 1.4 | 130 | 113 | 204 | 5.2 | 6.2 | 720 | 22 | 0.169 |
| 1.5 | 110 | 108 | 271 | 5.1 | 5.5 | 930 | 25 | 0.227 |
| 1.6 | 143 | 131 | 258 | 4.8 | 5.7 | 580 | 26 | 0.182 |

**Beispiel 2**

**Beispiel 2.1**

Die erfindungsgemäßen gefällten Kieselsäure 1.1 und 1.3 aus Beispiel 1 wurden in einer Emulsions-SBR Kautschukmischung untersucht. Als Stand der Technik und Referenz wurde die Kieselsäure Ultrasil VN2 GR der Degussa AG mit einer CTAB-Oberfläche von 125m$^2$/g ausgewählt.

Die für die Kautschukmischungen verwendete Rezeptur ist in der folgenden Tabelle 2.1 angegeben. Dabei bedeutet die Einheit phr Gewichtsanteile, bezogen auf 100 Teile des eingesetzten Rohkautschuks.

**Tabelle 2.1**

| 1. Stufe | Referenz | A | B |
|---|---|---|---|
| Buna SBR 1712 | 137.5 | 137.5 | 137.5 |
| Ultrasil VN2 GR | 50 | --- | --- |
| Kieselsäure gem. Bsp. 1.1 | --- | 50 | --- |
| Kieselsäure gem. Bsp. 1.3 | --- | --- | 50 |
| X50-S | 3 | 3 | 3 |
| ZnO | 3 | 2 | 3 |
| Stearinsäure | 1 | 1 | 1 |
| Vulkanox 4020 | 2 | 2 | 2 |
| Protektor G 3108 | 1.5 | 1.5 | 1.5 |
| **2. Stufe** | | | |
| Batch Stufe 1 | | | |
| **3. Stufe** | | | |
| Batch Stufe 2 | | | |
| Vulkacit D/C | 1.5 | 1.5 | 1.5 |
| Vulkacit CZ/EG | 1.5 | 1.5 | 1.5 |
| Schwefel | 2.2 | 2.2 | 2.2 |

Bei dem Polymer Buna 1712 handelt es sich um ein in Emulsion polymerisiertes SBR-Copolymer der Buna DOW Leuna mit einem Styrolgehalt von 23.5 Gew.% und einem Ölanteil von 37.5 phr. X50-S ist eine 50/50 Abmischung von Si 69 [Bis(3-triethoxysilylpropyl)tetrasulfan] und Ruß erhältlich von der Degussa AG. Bei Vulkanox 4020 handelt es sich um 6PPD der Bayer AG und Protektor G 3108 ist ein Ozonschutzwachs der HB-Fuller GmbH. Vulkacit D/C (DPG) und Vulkacit CZ/EG (CBS) sind Handelsprodukte der Bayer AG.

Die Kautschukmischungen werden in einem Innenmischer entsprechend der Mischvorschrift in Tabelle 2.2 hergestellt. In Tabelle 2.3 sind die verwendeten Methoden für die Gummitestung zusammengestellt. Die Mischungen werden 18 Minuten bei 160 °C vulkarisiert. Tabelle 2.4 zeigt die Ergebnisse der gummitechnischen Prüfung.

**Tabelle 2.2**

| Stufe 1 |
|---|
| **Einstellungen** |
| Mischaggregat Werner & Pfleiderer 1.5N-Typ |
| Drehzahl     45 min$^{-1}$ |
| Friktion     1:1.11 |
| Stempeldruck     5.5 bar |
| Leervolumen     1.61 |
| Füllgrad     0.73 |
| Durchflusstemp.     90 °C |

| **Mischvorgang** | |
|---|---|
| 0 bis 1 min | Polymer |
| 1 bis 2 min | Bestandteile 1. Stufe |
| 2 min | Säubern |
| 2 bis 3 min | Mischen, Lüften |
| 3 bis 4 min | Mischen mit 70 min$^{-1}$, Lüften |
| 4 bis 5 min | Mischen mit 75 min$^{-1}$, Ausfahren |
| Lagerung | 24 h bei Raumtemperatur |

| **Stufe 2** | |
|---|---|
| **Einstellungen** | |
| Mischaggregatwie in Stufe 1 bis auf: | |
| Drehzahl | 70 min$^{-1}$ |
| Füllgrad | 0.71 |

| **Mischvorgang** | |
|---|---|
| 0 bis 1 min | Batch Stufe 1 plastizieren |
| 1 bis 3 min | Batchtemperatur 150 °C durch Drehzahlvariation halten |
| 3 min | Ausfahren |
| Lagerung | 4 h bei Raumtemperatur |

| **Stufe 3** | |
|---|---|
| **Einstellungen** | |
| Mischaggregatwie in Stufe 1 bis auf | |
| Drehzahl | 40 min$^{-1}$ |
| Durchflusstemp. | 50 °C |
| Füllgrad | 0.69 |

| **Mischvorgang** | |
|---|---|
| 0 bis 2 min | Batch Stufe 2, Bestandteile Stufe 3 |
| 2 min | ausfahren und auf Labormischwalzwerk Fell bilden, (Durchmesser 200 mm, Länge 450 mm, Durchflusstemperatur 50 °C) |
| | Homogenisieren: |
| | 3* rechts, 3* links einschneiden; 3* bei weitem Walzenspalt (3.5 mm) stürzen |
| | und 3* bei engem Walzenspalt (1 mm): Fell ausziehen |

**Tabelle 23**

| Physikalische Testung | Norm/Bedingungen |
|---|---|
| Vulkameterprüfung, 160 °C | DIN 53529/3, ISO 6502 |
| | Drehmomentsdifferenz Dmax- Dmin [dNm] |
| | t10% und t90% [min] |
| Zugversuch am Ring, 23 °C | DIN 53504, ISO 37 |
| | Spannungswerte 100 % und 500 % [Mpa] |
| | Verstärkungsfaktor: Spannungswert 500 %/100 % [-] |
| | Bruchdehnung [%] |
| Shore-A-Härte, 23 °C [-] | DIN 53 505 |
| Ball Rebound [%], 0°C und 60°C | DIN EN ISO 8307, Stahlkugel 19 mm, 28 g |

(fortgesetzt)

| Physikalische Testung | Norm/Bedingungen |
|---|---|
| Vulkameterprüfung, 160 °C | DIN 53529/3, ISO 6502 |
| Drehmomentsdifferenz Dmax- Dmin [dNm] | |
| Dispersionskoeffizient [%] | siehe Text |

Der Dispersionskoeffizient wurde mittels der Oberflächen-Topographie incl. Medaliakorrektur bestimmt (A. Wehmeier, "Filler Dispersion Analysis by Topography Measurements" Technical Report TR 820, Degussa AG, Advanced Fillers and Pigments Division). Der so bestimmte Dispersionskoeffizient korreliert direkt mit einem Bestimmtheitsmaß von > 0.95 mit dem lichtoptisch bestimmten Dispersionskoeffizienten, wie er z. B. vom Deutschen Institut für Kautschuktechnologie e.V., Hannover/Deutschland bestimmt wird (H. Geisler, "Bestimmung der Mischgüte", präsentiert auf dem DIK-Workshop, 27. - 28. November 1997, Hannover/Germany).

**Tabelle 2.4**

| Rohmischungsdaten | Referenz | A | B |
|---|---|---|---|
| Dmax-Dmin | 11.5 | 11.8 | 11.6 |
| t10% | 4.9 | 4.6 | 4.6 |
| t90% | 9.8 | 9.6 | 9.5 |
| **Vulkanisatdaten** | | | |
| Spannungswert 100 % | 1.0 | 1.0 | 1.0 |
| Spannungswert 500 % | 9.1 | 9.9 | 10.3 |
| Spannungswert 500 %/100 % | 9.1 | 9.9 | 10.3 |
| Bruchdehnung | 530 | 500 | 520 |
| Shore-A-Härte | 51 | 51 | 51 |
| Ball-Rebound 0 °C | 22.1 | 21.2 | 21.3 |
| Ball-Rebound 60 °C | 71.0 | 70.4 | 70.3 |
| Dispersionskoeffizient | 98 | 99 | 97 |

Wie man anhand der Daten in Tabelle 2.4 erkennt, zeigen die Mischungen A und B mit den erfindungsgemäßen Kieselsäuren eine schnellere Vulkanisationszeit t90% als die Referenzmischung. Neben der schnelleren Vulkanisation sind insbesondere Vorteile in einem höheren Spannungswerte 500 % sowie dem erhöhten Verstärkungsfaktor zu erkennen. Die Ball-Rebound bei 0 und 60 °C sind vergleichbar, so dass keine Einbußen in Hystereseverhalten der Mischungen zu erwarten sind. Die Dispersion der erfindungsgemäßen Kieselsäuren ist sehr gut.

**Beispiel 2.2**

Die erfindungsgemäße gefällten Kieselsäure 1.2 aus Beispiel 1 wurden in einer SSBR/BR Kautschukmischung untersucht. Als Stand der Technik und Referenz wurde die Kieselsäure Ultrasil 3370 GR der Degussa AG mit einer CTAB-Oberfläche von 160 m$^2$/g ausgewählt. Die verwendete Mischung stellt eine Modelrezeptur für eine PKW-Laufflächenmischung dar.

Die für die Kautschukmischungen verwendete Rezeptur ist in der folgenden Tabelle 2.5 angegeben. Dabei bedeutet die Einheit phr Gewichtsanteile, bezogen auf 100 Teile des eingesetzten Rohkautschuks.

**Tabelle 2.5**

| 1. Stufe | Referenz | C |
|---|---|---|
| Buna VSL 5025-1 | 96 | 96 |
| Buna CB 24 | 30 | 30 |
| Ultrasil 3370 GR | 80 | --- |
| Kieselsäure gem. Bsp. 1.2 | --- | 80 |

(fortgesetzt)

| 1. Stufe | Referenz | C |
|---|---|---|
| X50-S | 12.8 | 12.8 |
| ZnO | 2 | 2 |
| Stearinsäure | 2 | 2 |
| Naftolen ZD | 10 | 10 |
| Vulkanox 4020 | 1.5 | 1.5 |
| Protektor G 3108 | 1 | 1 |
| **2. Stufe** | | |
| Batch Stufe 1 | | |
| | | |
| **3. Stufe** | | |
| Batch Stufe 2 | | |
| Vulkacit D/C | 2.0 | 2.0 |
| Vulkacit CZ/EG | 1.5 | 1.5 |
| Perkazit TBZTD | 0.2 | 0.2 |
| Schwefel | 1.5 | 1.5 |

Bei dem Polymer VSL 5025-1 handelt es sich um ein in Lösung polymerisiertes SBR-Copolymer der Bayer AG mit einem Styrolgehalt von 25 Gew.-% und einem Butadiengehalt von 75 Gew.%. Das Copolymer enthält 37.5 phr Öl und weist eine Mooney-Viskosität (ML 1+4/100 °C) von 50 ± 4 auf. Bei dem Polymer Buna CB 24 handelt es sich um ein cis-1,4-Polybutadien (Neodymtyp) der Bayer AG mit cis-1,4-Gehalt von mindestens 97 % und einer Mooney-Viskosität von 44 ± 5. X50-S ist eine 50/50 Abmischung von Si 69 [Bis(3-triethoxysilylpropyl)tetrasulfan] und Ruß erhältlich von der Degussa AG. Als aromatisches Öl wird Naftolen ZD der Chemetall verwendet. Bei Vulkanox 4020 handelt es sich um 6PPD der Bayer AG und Protektor G 3108 ist ein Ozonschutzwachs der HB-Fuller GmbH. Vulkacit D/C (DPG) und Vulkacit CZ/EG (CBS) sind Handelsprodukte der Bayer AG. Perkazit TBZTD ist von der Akzo Chemie GmbH erhältlich.

Die Kautschukmischungen werden in einem Innenmischer entsprechend der Mischvorschrift in Tabelle 2.6 hergestellt. Zusätzlich zu den in Tabelle 2.3 aufgezeigten Methoden für die Gummitestung wurden die in Tabelle 2.7 zusammengestellten Methoden verwendet. Die Mischungen werden 15 Minuten bei 165 °C vulkanisiert. Tabelle 2.8 zeigt die Ergebnisse der gummitechnischen Prüfung.

**Tabelle 2.6**

| **Stufe 1** |
|---|
| **Einstellungen** |
| Mischaggregat Werner & Pfleiderer 1.5N-Typ |
| Drehzahl 70 min⁻¹ |
| Friktion 1:1.11 |
| Stempeldruck 5.5 bar |
| Leervolumen 1.61 |
| Füllgrad 0.73 |
| Durchflusstemp. 70 °C |
| **Mischvorgang** |
| 0 bis 1 min Buna VSL 5025-1 + Buna CB 24 |
| 1 bis 3 min 1/2 Füllstoff, X50-S |
| 3 bis 4 min 1/2 Füllstoff, restliche Bestandteile Stufe 1 |
| 4 min Säubern |
| 4 bis 5 min Mischen und Ausfahren |

(fortgesetzt)

| Mischvorgang | |
|---|---|
| Lagerung | 24 h bei Raumtemperatur |

| **Stufe 2** | |
|---|---|
| **Einstellungen** | |
| Mischaggregatwie in Stufe 1 bis auf: | |
| Drehzahl | 80 min$^{-1}$ |
| Durchflusstemp. | 80 °C |
| Füllgrad | 0.70 |

| **Mischvorgang** | |
|---|---|
| 0 bis 2 min | Batch Stufe 1 plastizieren |
| 2 bis 5 min | Batchtemperatur 150 °C durch |
| | Drehzahlvariation halten |
| 5 min | Ausfahren |
| Lagerung | 4 h bei Raumtemperatur |

| **Stufe 3** | |
|---|---|
| **Einstellungen** | |
| Mischaggregatwie in Stufe 1 bis auf | |
| Drehzahl | 40 min$^{-1}$ |
| Durchflusstemp. | 50 °C |
| Füllgrad | 0.69 |

| **Mischvorgang** | |
|---|---|
| 0 bis 2 min | Batch Stufe 2, Bestandteile Stufe 3 |
| 2 min | ausfahren und auf Labormischwalzwerk Fell bilden, (Durchmesser 200 mm, Länge 450 mm, Durchflusstemperatur 50 °C) |
| | Homogenisieren: |
| | 3* links, 3* rechts einschneiden |
| | 5* bei engem Walzenspalt (1 mm) und |
| | 5* bei weitem Walzenspalt (3.5 mm) stürzen und Fell ausziehen |

**Tabelle 2.7**

| Physikalische Testung | Norm/Bedingungen |
|---|---|
| Vulkameterprüfung, 165 °C | DIN 53529/3, ISO 6502 |
| Drehmomentsdifferenz Dmax- Dmin [dNm] | |
| t10% und t90% [min] | |
| Viskoelastische Eigenschaften, | DIN 53 513, ISO 2856 |
| 0 und 60 °C, 16 Hz, 50 N Vorkraft und 25 N Amplitudenkraft | |
| Meßwertaufnahme nach 2 min Prüfzeit, sprich 2 min Konditionierung | |
| Komplexer Modul E* [Mpa] | |
| Verlustfaktor tan $\delta$ [-] | |

**Tabelle 2.8**

| Rohmischungsdaten | Referenz | C |
|---|---|---|
| Dmax-Dmin | 18.6 | 18.5 |
| t10% | 1.5 | 1.5 |
| t90% | 6.3 | 6.1 |
| **Vulkanisatdaten** | | |
| Spannungswert 100 % | 2.8 | 2.8 |
| Spannungswert 300 % | 13.4 | 14.7 |
| Spannungswert 300 %/100 % | 4.8 | 5.3 |
| Bruchdehnung | 370 | 330 |
| Shore-A-Härte | 66 | 66 |
| Ball-Rebound 0 °C | 15.3 | 15.2 |
| Ball-Rebound 60 °C | 61.4 | 61.6 |
| E* (0 °C) | 23.4 | 31.8 |
| E* (60 °C) | 8.8 | 9.0 |
| tan $\delta$ (0 °C) | 0.360 | 0.441 |
| tan $\delta$ (60 °C) | 0.129 | 0.110 |
| Dispersionskoeffizient | 95 | 99 |

Wie man anhand der Daten in Tabelle 2.8 erkennt, bestätigen sich die auch in Beispiel 2.1 gefundenen Vorteile in der Vulkanisationskinetik und einer erhöhten Verstärkung für die Mischung C mit der erfindungsgemäßen Kieselsäure. Man findet zudem Vorteile im Hystereseverhalten der Mischung C. Der Verlustfaktor tan $\delta$ (0°C) ist erhöht, was ein verbessertes Nassrutschverhalten anzeigt und der tan $\delta$ (60°C) erniedrigt, was für einen erniedrigten Rollwiderstand spricht. Ferner ist die Dispersionsgüte der erfindungsgemäßen Kieselsäuren außergewöhnlich hoch wodurch Vorteile im Straßenabriebs erreicht werden.

**Patentansprüche**

1.  Fällungskieselsäure, **gekennzeichnet durch** folgende physikalisch-chemische Parameter:

    CTAB-Oberfläche 100-160 m$^2$/g, gemessen mit modifizierter ASTM 3765, bzw, NFT 45-007 (Kapitel 5.12.1.3);
    BET-Oberfläche 100-190 m$^2$/g, gemäß ISO 5794-1/Annex D;
    DBP-Zahl 180-300 g/(100 g), gemessen mit modifizierter Norm DIN 53601;
    Searszahl $V_2$ 15-28 ml/(5 g)
    Feuchte 4-8 %, gemessen mit modifizierter ISO 787-2

    Verhältnis Searszahl $V_2$ zu BET-Oberfläche 0,150 bis 0,280 ml (5m$^2$).

2.  Fällungskieselsäure nach Anspruch 1, **dadurch gekennzeichnet, dass** die BET-Oberfläche 100 bis 170 m$^2$/g beträgt.

3.  Fällungskieselsäure nach Anspruch 1 oder 2, **dadurch gekennzeichnet, dass** die CTAB-Oberfläche 100 bis 150 m$^2$/g beträgt.

4.  Fällungskieselsäure nach einem der Ansprüche 1 bis 3, **dadurch gekennzeichnet, dass** die Searszahl $V_2$ 20 bis 28 ml/(5 g) beträgt.

5.  Fällungskieselsäure nach einem der Ansprüche 1 bis 3, **dadurch gekennzeichnet, dass** die Searszahl $V_2$ 22 bis 28 ml/ (5 g) beträgt.

6.  Fällungskieselsäure nach einem der Ansprüche 1 bis 5, **dadurch gekennzeichnet, dass** die DBP-Zahl 200 bis 250 g/ (100 g) beträgt.

7. Fällungskieselsäure nach einem der Ansprüche 1 bis 5, **dadurch gekennzeichnet, dass** die DBP-Zahl 250 bis 280 g/ (100 g) beträgt.

8. Fällungskieselsäure nach einem der Ansprüche 1 bis 7, **dadurch gekennzeichnet, dass** das Verhältnis BET/CTAB 0.9 bis 1.2 beträgt.

9. Verfahren zur Herstellung von Fällungskieselsäuren nach einem der Ansprüche 1 bis 8, wobei

a) eine wässrige Lösung eines Alkali-oder Erdalkalisilikats und/oder einer organischen und/oder anorganischen Base mit einer Alkalizahl von 7 bis 30 vorgelegt,
b) in diese Vorlage unter Rühren bei 55 bis 95 °C für 10 bis 120 min gleichzeitig Wasserglas und ein Säuerungsmittel derart zudosiert werden, dass während der Fällung die AZ-Zahl konstant zwischen 7 bis 30 bleibt,
c) mit einem Säuerungsmittel auf einen pH-Wert von ca. 2.5 bis 6 angesäuert und
d) filtriert, gewaschen und getrocknet wird.

10. Verfahren nach Anspruch 9, **dadurch gekennzeichnet, dass** die AZ-Zahl zwischen 15 und 25 liegt.

11. Verfahren nach einem der Ansprüche 9 oder 10, **dadurch gekennzeichnet, dass** nach Schritt a), die Schritte

b') Stoppen der Zudosierung für 30 bis 90 Minuten unter Einhaltung der Temperatur und
b") anschließend bei gleicher Temperatur für 10 bis 120, bevorzugt 10 bis 60 Minuten, gleichzeitige Zugabe von Wasserglas und einem Säuerungsmittel derart, dass die AZ-Zahl während der Fällung konstant bleibt,

ausgeführt werden.

12. Verfahren nach einem der Ansprüche 9 oder 11, **dadurch gekennzeichnet, dass** während des Schritts b) und/oder b') und/oder b") eine Zugabe eines organischen oder anorganischen Salzes erfolgt.

13. Verfahren nach einem der Ansprüche 9 bis 12, **dadurch gekennzeichnet, dass** zur Trocknung ein Stromtrockner, Sprühtrockner, Etagentrockner, Bandtrockner, Drehrohrtrockner, Flash-Trockner, Spin-Flash-Trockner oder Düsenturm eingesetzt wird.

14. Verfahren nach den Ansprüchen 9 bis 13, **dadurch gekennzeichnet, dass** nach der Trocknung eine Granulation mit einem Walzenkompaktor durchgeführt wird,

15. Fällungskieselsäuren nach einem der Ansprüche 1 bis 8, **dadurch gekennzeichnet, dass** ihre Oberflächen mit Organosilanen der Formel I bis III modifiziert sind:

$$[SiR^1_n(OR)_r(Alk)_m(Ar)_p]_q[B] \qquad (I),$$

$$SiR^1_n(OR)_{3-n}(Alkyl) \qquad (II),$$

oder

$$SiR^1_n(OR)_{3-n}(Alkenyl) \qquad (III),$$

in denen bedeuten

B: -SCN, -SH, -Cl, -NH$_2$, -OC(O)CHCH$_2$, -OC(O)C(CH$_3$)CH$_2$ (wenn q = 1) oder -S$_w$- (wenn q = 2), wobei B chemisch an Alk gebunden ist,
R und R$^1$: aliphatischer, olefinischer, aromatischer oder arylaromatischer Rest mit 2-30 C-Atomen, der optional mit den folgenden Gruppen substituiert sein kann:
Hydroxy-, Amino-, Alkoholat-, Cyanid-, Thiocyanid-, Halogen-, Sulfonsäure-, Sulfonsäureester-, Thiol-, Benzoesäure-, Benzoesäureester-, Carbonsäure-, Carbonsäureester-, Acrylat-, Metacrylat-, Organosilanrest, wobei R und R$^1$ eine gleiche oder verschiedene Bedeutung oder Substituierung haben können.
n: 0,1 oder 2,
Alk : einen zweiwertigen unverzweigten oder verzweigten Kohlenwasserstoffrest mit 1 bis 6 Kohlenstoffatomen,
m: 0 oder 1,

Ar: einen Arylrest mit 6 bis 12 C-Atomen, bevorzugt 6 C-Atomen, der mit den folgenden Gruppen substituiert sein kann: Hydroxy-, Amino-, Alkoholat-, Cyanid-, Thiocyanid-, Halogen-, Sulfonsäure-, Sulfonsäureester-, Thiol-, Benzoesäure-, Benzoesäureester-, Carbonsäure-, Carbonsäureester-, Acrylat-, Metacrylat-, Organosilanrest,

p: 0 oder 1, mit der Maßgabe, dass p und n nicht gleichzeitig 0 bedeuten,

q: 1 oder 2,

w: eine Zahl von 2 bis 8,

r: 1,2 oder 3, mit der Maßgabe, dass $r + n + m + p = 4$,

Alkyl: einen einwertigen unverzweigten oder verzweigten gesättigten Kohlenwasserstoffrest mit 1 bis 20 Kohlenstoffatomen, bevorzugt 2 bis 8 Kohlenstoffatomen,

Alkenyl : einen einwertigen unverzweigten oder verzweigten ungesättigten Kohlenwasserstoffrest mit 2 bis 20 Kohlenstoffatomen, bevorzugt 2 bis 8 Kohlenstoffatomen.

16. Fällungskieselsäuren nach einem der Ansprüche 1 bis 8, **dadurch gekennzeichnet, dass** ihre Oberflächen mit Siliciumorganischen Verbindungen der Zusammensetzung

$$SiR^2_{4-n}X_n$$

(mit n = 1, 2,3, 4),

$$[SiR^2_xX_yO]_x$$

(mit $0 \leq x \leq 2$; $0 \leq y \leq 2$; $3 \leq z \leq 10$, mit $x + y = 2$),

$$[SiR^2_xX_yN]_z$$

(mit $0 \leq x \leq 2$; $0 \leq y \leq 2$; $3 \leq z \leq 10$, mit $x + y = 2$),

$$SiR^2_nX_mOSiR^2_oX_p$$

(mit $0 \leq n \leq 3$; $0 \leq m \leq 3$; $0 \leq o \leq 3$; $0 \leq p \leq 3$, mit $n + m = 3$, $o + p = 3$),

$$SiR^2_oX_mNSiR^2_oX_p$$

(mit $0 \leq n \leq 3$; $0 \leq m \leq 3$; $0 \leq o \leq 3$; $0 \leq p \leq 3$, mit $n + m = 3$, $o + p = 3$), und/oder

$$SiR^2_nX_m[SiR^2_xX_yO]_zSiR^2_oX_p$$

(mit $0 \leq n \leq 3$; $0 \leq m \leq 3$; $0 \leq x \leq 2$; $0 \leq y \leq 2$; $o \leq 3$; $0 \leq p \leq 3$; $1 \leq z \leq 10000$, mit $n + m = 3$, $x + y = 2$, $o + p = 3$) wobei bedeuten

$R^2$: substituierte und/oder unsubstituierte Alkyl-und/oder Arylreste mit 1-20 Kohlenstoffatomen und/oder Alkoxy- und/oder Alkenyl-und/oder Alkinyl- -Gruppen und/oder schwefelhaltige Gruppen

X: Silanol-, Amino-, Thiol-, Halogen-, Alkoxy-, Alkenyl-und/oder Wasserstoff-Rest,

modifiziert sind.

17. Verfahren zur Herstellung der Kieselsäuren gemäß Anspruch 15 oder 16, **dadurch gekennzeichnet, dass** man die Fällungskieselsäuren mit Organosilanen in Mischungen von 0.5 bis 50 Teilen, bezogen auf 100 Teile Fällungskieselsäure, insbesondere 1 bis 15 Teile, bezogen auf 100 Teile Fällungskieselsäure modifiziert, wobei die Reaktion zwischen Fällungskieselsäure und Organosilan während der Mischungsherstellung (in situ) oder außerhalb durch Aufsprühen und anschließendes Tempern der Mischung, durch Mischen des Organosilans und der Kieselsäuresuspension mit anschließender Trocknung und Temperung durchgeführt wird.

18. Verwendung von Kieselsäuren gemäß einem der Ansprüche 1 bis 17 in Elastomerenmischungen, vulkanisierbaren Kautschukmischungen und/oder sonstigen Vulkanisaten, wie Luftreifen, Reifenlaufflächen, Kabelmänteln, Schläuchen, Treibriemen, Förderbändern, Keilriemen, Walzenbelägen, Reifen, Schuhsohlen, Dichtungen und Dämpfungselementen.

**19.** Verwendung von Kieselsäuren nach einem der Ansprüche 1 bis 17 in Batterieseparatoren, als Anti-Blocking-Mittel, als Mattierungsmittel in Farben und Lacken, als Träger von Agrarprodukten und Nahrungsmitteln, in Beschichtungen, in Druckfarben, in Feuerlöschpulvern, in Kunststoffen, im Bereich Non impact printing, in Papiermasse, im Bereich Personal care.

**20.** Vulkanisierbare Kautschukmischungen und Vulkanisate, die die Fällungskieselsäure gemäß Anspruch 1 mit folgenden physikalisch-chemischen Parametern

| | |
|---|---|
| CTAB-Oberfläche | 100-160 m$^2$/g |
| BET-Oberfläche | 100-190 m$^2$/g |
| DBP-Zahl | 180-300 g/(100 g) |
| Searszahl $V_2$ | 15-28 ml/(5 g) |
| Feuchte | 4-8 %. |

als Füllstoff enthalten.

**Claims**

**1.** Precipitated silica, **characterized by** the following physical and chemical parameters:

CTAB surface area 100-160 m$^2$/g, measured using modified ASTM 3765, or NFT 45-007 (Section 5.12.1.3);
BET surface area 100-190 m$^2$/g, to ISO 5794-1/Annex D;
DBP value 180-300 g/(100 g), measured using modified standard DIN 53601;
Sears value $V_2$ 15-28 ml/(5 g)
Moisture level 4-8%, measured using modified ISO 787-2

Ratio of Sears value $V_2$ to BET surface area 0.150 to 0.280 ml (5m$^2$) .

**2.** Precipitated silica according to Claim 1, **characterized in that** the BET surface area is from 100 to 170 m$^2$/g.

**3.** Precipitated silica according to Claim 1 or 2, **characterized in that** the CTAB surface area is from 100 to 150 m$^2$/g.

**4.** Precipitated silica according to any of Claims 1 to 3, **characterized in that** the Sears value $V_2$ is from 20 to 28 ml/(5 g).

**5.** Precipitated silica according to any of Claims 1 to 3, **characterized in that** the Sears value $V_2$ is from 22 to 28 ml/(5 g).

**6.** Precipitated silica according to any of Claims 1 to 5, **characterized in that** the DBP value is from 200 to 250 g/(100 g).

**7.** Precipitated silica according to any of Claims 1 to 5, **characterized in that** the DBP value is from 250 to 280 g/(100 g).

**8.** Precipitated silica according to any of Claims 1 to 7, **characterized in that** the BET/CTAB ratio is from 0.9 to 1.2.

**9.** Process for preparing precipitated silicas according to any of Claims 1 to 8, which comprises

a) taking an aqueous solution of an alkali metal silicate or alkaline earth metal silicate and/or of an organic and/or inorganic base with an alkali value from 7 to 30 as initial charge,
b) metering water glass and an acidifier simultaneously into this initial charge at from 55 to 95°C, with stirring, for from 10 to 120 minutes, in such a way that during the precipitation the AV remains constant at from 7 to 30,
c) using an acidifier to acidify to a pH of from approx. 2.5 to 6, and
d) filtering, washing and drying.

**10.** Process according to Claim 9, **characterized in that** the AV is from 15 to 25.

**11.** Process according to either of Claims 9 and 10, **characterized in that**, after step a), the steps carried out comprise

b') stopping the feed for from 30 to 90 minutes while maintaining the temperature, and

b") then, at the same temperature, for from 10 to 120 minutes, preferably from 10 to 60 minutes, simultaneously adding water glass and an acidifier in such a way that the AV remains constant during the precipitation.

12. Process according to either of Claims 9 and 11, **characterized in that** during step b) and/or b') and/or b") an organic or inorganic salt is added.

13. Process according to any of Claims 9 to 12, **characterized in that** for the drying process use is made of a pneumatic drier, spray drier, disk drier, belt drier, rotating-tube drier, flash drier, spin flash drier, or spray tower.

14. Process according to Claims 9 to 13, **characterized in that**, after the drying process, a roller compactor is used for pelletizing.

15. Precipitated silicas according to any of Claims 1 to 8, **characterized in that** their surfaces have been modified with organosilanes of the formulae I to III:

$$[SiR^1_n(OR)_r(Alk)_m(Ar)_p]_q[B] \qquad (I),$$

$$SiR^1n(OR)_{3-n}(Alkyl) \qquad (II),$$

or

$$SiR^1n(OR)_{3-n}(Alkenyl) \qquad (III),$$

where

B is -SCN, -SH, -Cl, -NH$_2$, -OC(O)CHCH$_2$, -OC(O)C(CH$_3$)CH$_2$ (if q = 1), or -S$_w$- (if q = 2), B being chemically bonded to Alk,
R and R$^1$ are an aliphatic, olefinic, aromatic, or arylaromatic radical having 2-30 carbon atoms, optionally with substitution by the following groups: the hydroxyl, amino, alcoholate, cyanide, thiocyanide, halo, sulfonic acid, sulfonic ester, thiol, benzoic acid, benzoic ester, carboxylic acid, carboxylic ester, acrylate, methacrylate, or organosilane radical, where the meaning or substitution of R and R$^1$ may be identical or different,
n is 0, 1, or 2,
Alk is a bivalent unbranched or branched hydrocarbon radical having from 1 to 6 carbon atoms,
m is 0 or 1,
Ar is an aryl radical having from 6 to 12 carbon atoms, preferably 6 carbon atoms, which may have substitution by the following groups: the hydroxyl, amino, alcoholate, cyanide, thiocyanide, halo, sulfonic acid, sulfonic ester, thiol, benzoic acid, benzoic ester, carboxylic acid, carboxylic ester, acrylate, methacrylate, or organosilane radical,
p is 0 or 1, with the proviso that p and n are not simultaneously 0,
q is 1 or 2,
w is a number from 2 to 8,
r is 1, 2, or 3, with the proviso that r + n + m + p = 4,
Alkyl is a monovalent unbranched or branched saturated hydrocarbon radical having from 1 to 20 carbon atoms, preferably from 2 to 8 carbon atoms,
Alkenyl is a monovalent unbranched or branched unsaturated hydrocarbon radical having from 2 to 20 carbon atoms, preferably from 2 to 8 carbon atoms.

16. Precipitated silicas according to any of Claims 1 to 8, **characterized in that** their surfaces have been modified with organosilicon compounds whose composition is

$$SiR^2_{4-n}X_n$$

(where n = 1, 2, 3, 4),

$$[SiR^2_xX_yO]_x$$

(where $0 \leq x \leq 2$; $0 \leq y \leq 2$; $3 \leq z \leq 10$, where x + y = 2),

$$[SiR^2_x X_y N]_z$$

(where $0 \le x \le 2$; $0 \le y \le 2$; $3 \le z \le 10$, where $x + y = 2$),

$$SiR^2_n X_m OSiR^2_o X_p$$

(where $0 \le n \le 3$; $0 \le m \le 3$; $0 \le o \le 3$; $0 \le p \le 3$, where $n + m = 3$, $o + p = 3$),

$$SiR^2_o X_m NSiR^2_o X_p$$

(where $0 \le n \le 3$; $0 \le m \le 3$; $0 \le o \le 3$; $0 \le p \le 3$, where $n + m = 3$, $o + p = 3$), and/or

$$SiR^2_n X_m [SiR^2_x X_y O]_z SiR^2_o X_p$$

(where $0 \le n \le 3$; $0 \le m \le 3$; $0 \le x \le 2$; $0 \le y \le 2$; $o \le 3$; $0 \le p \le 3$; $1 \le z \le 10\,000$, where $n + m = 3$, $x + y = 2$, $o + p = 3$) where

$R^2$ is alkyl and/or aryl radicals, substituted and/or unsubstituted, having 1-20 carbon atoms, and/or is alkoxy and/or alkenyl and/or alkynyl groups, and/or is sulfur-containing groups,

X is a silanol, amino, thiol, halogen, alkoxy, alkenyl and/or hydrogen radical.

17. Process for preparing the silicas according to Claim 15 or 16, **characterized in that** the precipitated silicas are modified with organosilanes in mixtures of from 0.5 to 50 parts, based on 100 parts of precipitated silica, in particular from 1 to 15 parts, based on 100 parts of precipitated silica, where the reaction between precipitated silica and organosilane is carried out during the preparation of the mixture (in situ) or externally via spray application and subsequent heat-conditioning of the mixture, via mixing of the organosilane and the silica suspension with subsequent drying and heat-conditioning.

18. Use of silicas according to any of Claims 1 to 17 in elastomer mixtures, in vulcanizable rubber mixtures, and/or in other vulcanizates, such as pneumatic tires, tire treads, cable sheathing, hoses, drive belts, conveyor belts, V-belts, roller coverings, tires, shoe soles, gaskets, and damping elements.

19. Use of silicas according to any of Claims 1 to 17 in battery separators, as antiblocking agent, as matting agent in inks and paints, as carrier for agricultural products and for feeds, in coatings, in printing inks, in fire-extinguisher powders, in plastics, in the non-impact printing sector, in paper pulp, or in the personal care sector.

20. Vulcanizable rubber mixtures and vulcanizates comprising, as filler, the precipitated silica according to Claim 1, with the following physical and chemical parameters:

| | |
|---|---|
| CTAB surface area | 100-160 m$^2$/g |
| BET surface area | 100-190 m$^2$/g |
| DBP value | 180-300 g/(100 g) |
| Sears value $V_2$ | 15-28 ml/(5 g) |
| Moisture level | 4-8%. |

**Revendications**

1. Silice précipitée, **caractérisée par** les paramètres physico-chimiques suivants :

| | |
|---|---|
| Surface CTAB | 100 à 160 m$^2$/g, mesurée avec ASTM 3765 modifié ou NFT 45-007 (chapitre 5.12.1.3) ; |
| Surface BET | 100 à 190 m$^2$/g, selon ISO 5794-1/Annexe D ; |
| Indice DBP | 180 à 300 g/(100 g), mesurée avec la norme DIN 53601 modifiée ; |
| Nombre de Sears $V_2$ | 15 à 28 ml/(5 g), |

(suite)

| Humidité | 4 à 8 %, mesurée avec ISO 787-2 modifié |
| Rapport nombre de Sears $V_2$ sur surface BET | 0,150 à 0,280 ml/(5 m$^2$). |

**2.** Silice précipitée selon la revendication 1, **caractérisée en ce que** la surface BET est de 100 à 170 m$^2$/g.

**3.** Silice précipitée selon la revendication 1 ou 2, **caractérisée en ce que** la surface CTAB est de 100 à 150 m$^2$/g.

**4.** Silice précipitée selon l'une quelconque des revendications 1 à 3, **caractérisée en ce que** le nombre de Sears $V_2$ est de 20 à 28 ml/(5 g).

**5.** Silice précipitée selon l'une quelconque des revendications 1 à 3, **caractérisée en ce que** le nombre de Sears $V_2$ est de 22 à 28 ml/(5 g).

**6.** Silice précipitée selon l'une quelconque des revendications 1 à 5, **caractérisée en ce que** l'indice DBP est de 200 à 250 g/(100 g).

**7.** Silice précipitée selon l'une quelconque des revendications 1 à 5, **caractérisée en ce que** l'indice DBP est de 250 à 280 g/(100 g).

**8.** Silice précipitée selon l'une quelconque des revendications 1 à 7, **caractérisée en ce que** le rapport BET/CTAB est de 0,9 à 1,2.

**9.** Procédé de fabrication de silices précipitées selon l'une quelconque des revendications 1 à 8, dans lequel

a) une solution aqueuse d'un silicate alcalin ou alcalino-terreux et/ou d'une base organique et/ou inorganique d'un indice alcalin de 7 à 30 est chargée initialement,
b) du verre soluble et un acidifiant sont ajoutés simultanément à cette charge initiale sous agitation à une température de 55 à 95 °C pendant 10 à 120 minutes, de manière à ce que l'indice AZ reste constant entre 7 et 30 pendant la précipitation,
c) on acidifie avec un acidifiant à un pH d'environ 2,5 à 6 et
d) on filtre, on lave et on sèche.

**10.** Procédé selon la revendication 9, **caractérisé en ce que** l'indice AZ est compris entre 15 et 25.

**11.** Procédé selon l'une quelconque des revendications 9 ou 10, **caractérisé en ce que** les étapes

b') arrêt de l'ajout pendant 30 à 90 minutes en maintenant la température, puis
b") ajout simultané de verre soluble et d'un acidifiant à la même température pendant 10 à 120 minutes, de préférence 10 à 60 minutes, de manière à ce que l'indice AZ reste constant pendant la précipitation, sont réalisées après l'étape a).

**12.** Procédé selon l'une quelconque des revendications 9 ou 11, **caractérisé en ce qu'**un ajout d'un sel organique ou inorganique a lieu pendant l'étape b) et/ou b') et/ou b").

**13.** Procédé selon l'une quelconque des revendications 9 à 12, **caractérisé en ce qu'**un séchoir à écoulement, un séchoir à pulvérisation, un séchoir à étages, un séchoir à bande, un séchoir à tube rotatif, un séchoir pneumatique, un séchoir pneumatique rotatif ou une tour à buses est utilisé(e) pour le séchage.

**14.** Procédé selon l'une quelconque des revendications 9 à 13, **caractérisé en ce qu'**une granulation avec un compacteur à cylindres est réalisée après le séchage.

**15.** Silices précipitées selon l'une quelconque des revendications 1 à 8, **caractérisées en ce que** leurs surfaces sont modifiées avec des organosilanes de formules I à III :

$$[SiR^1{}_n(OR)_r(Alk)_m(Ar)_p]_q[B] \qquad (I),$$

$$SiR^1{}_n(OR)_{3-n}(Alkyle) \qquad (II),$$

ou

$$SiR^1{}_n(OR)_{3-n}(Alcényle) \qquad (III),$$

dans lesquelles

B signifie : -SCN, -SH, -Cl, -NH$_2$, -OC(O)CHCH$_2$,-OC(O)C(CH$_3$)CH$_2$ (lorsque q = 1) ou -S$_w$- (lorsque q = 2), B étant relié chimiquement à Alk,

R et R$^1$ signifient : radical aliphatique, oléfinique, aromatique ou arylaromatique de 2 à 30 atomes C, qui peut éventuellement être substitué avec les groupes suivants : radical hydroxy, amino, alcoolate, cyanure, thiocyanure, halogène, acide sulfonique, ester de l'acide sulfonique, thiol, acide benzoïque, ester de l'acide benzoïque, acide carboxylique, ester de l'acide carboxylique, acrylate, méthacrylate, organosilane, R et R$^1$ pouvant avoir une signification ou une substitution identique ou différente,

n signifie : 0, 1 ou 2,

Alk signifie : un radical hydrocarboné bivalent ramifié ou non ramifié de 1 à 6 atomes de carbone,

m signifie : 0 ou 1,

Ar signifie : un radical aryle de 6 à 12 atomes C, de préférence de 6 atomes C, qui peut être substitué avec les groupes suivants : radical hydroxy, amino, alcoolate, cyanure, thiocyanure, halogène, acide sulfonique, ester de l'acide sulfonique, thiol, acide benzoïque, ester de l'acide benzoïque, acide carboxylique, ester de l'acide carboxylique, acrylate, méthacrylate, organosilane,

p signifie : 0 ou 1, à condition que p et n ne signifient pas simultanément 0,

q signifie : 1 ou 2,

w signifie : un nombre de 2 à 8,

r signifie : 1, 2 ou 3, à condition que r + n + m + p = 4,

Alkyle signifie : un radical hydrocarboné monovalent saturé ramifié ou non ramifié de 1 à 20 atomes de carbone, de préférence de 2 à 8 atomes de carbone,

Alcényle signifie : un radical hydrocarboné monovalent insaturé ramifié ou non ramifié de 2 à 20 atomes de carbone, de préférence de 2 à 8 atomes de carbone.

**16.** Silices précipitées selon l'une quelconque des revendications 1 à 8, **caractérisées en ce que** leurs surfaces sont modifiées avec des composés organiques de silicium de composition

$$SiR^2{}_{4-n}X_n$$

(avec n = 1, 2, 3, 4),

$$[SiR^2{}_x X_y O]_x$$

(avec $0 \leq x \leq 2$ ; $0 \leq y \leq 2$ ; $3 \leq z \leq 10$, avec x + y = 2),

$$[SiR^2{}_x X_y N]_z$$

(avec $0 \leq x \leq 2$ ; $0 \leq y \leq 2$ ; $3 \leq z \leq 10$, avec x + y = 2),

$$SiR^2{}_n X_m OSiR^2{}_o X_p$$

(avec $0 \leq n \leq 3$ ; $0 \leq m \leq 3$ ; $0 \leq o \leq 3$ ; $0 \leq p \leq 3$, avec n + m = 3, o + p = 3),

$$SiR^2{}_o X_m NSiR^2{}_o X_p$$

(avec $0 \leq n \leq 3$ ; $0 \leq m \leq 3$ ; $0 \leq o \leq 3$ ; $0 \leq p \leq 3$, avec n + m = 3, o + p = 3), et/ou

$$SiR^2{}_n X_m [SiR^2{}_x X_y O]_z SiR^2{}_o X_p$$

(avec $0 \leq n \leq 3$ ; $0 \leq m \leq 3$ ; $0 \leq x \leq 2$ ; $0 \leq y \leq 2$ ; $o \leq 3$ ; $0 \leq p \leq 3$ ; $1 \leq z \leq 10\,000$, avec n + m = 3, x + y = 2 ; o + p = 3),

R$^2$ signifiant : radicaux alkyle et/ou aryle substitués et/ou non substitués de 1 à 20 atomes de carbone et/ou groupes alcoxy et/ou alcényle et/ou alcynyle et/ou groupes contenant du soufre,

X signifiant : radical silanol, amino, thiol, halogène, alcoxy, alcényle et/ou hydrogène.

17. Procédé de fabrication des silices selon la revendication 15 ou 16, **caractérisé en ce que** les silices précipitées sont modifiées avec des organosilanes dans des mélanges de 0,5 à 50 parties, par rapport à 100 parties de silice précipitée, notamment 1 à 15 parties, par rapport à 100 parties de silice précipitée, la réaction entre la silice précipitée et l'organosilane étant réalisée pendant la fabrication du mélange (in situ) ou en dehors par pulvérisation, puis recuit du mélange, par mélange de l'organosilane et de la suspension de silice avec séchage et recuit ultérieurs.

18. Utilisation de silices selon l'une quelconque des revendications 1 à 17 dans des mélanges d'élastomères, des mélanges de caoutchoucs vulcanisables et/ou d'autres vulcanisats, tels que des pneumatiques, des surfaces de roulement de pneus, des gainages de câbles, des tuyaux, des courroies d'entraînement, des bandes transporteuses, des courroies trapézoïdales, des revêtements de cylindres, des pneus, des semelles de chaussures, des joints et des éléments d'amortissement.

19. Utilisation de silices selon l'une quelconque des revendications 1 à 17 dans des plaques d'interconnexion de batteries, en tant qu'agent anti-adhérent, en tant qu'agent matifiant dans les peintures et les laques, en tant que support de produits agraires et de produits alimentaires, dans des revêtements, dans des encres d'impression, dans des poudres d'extinction des incendies, dans des plastiques, dans le domaine de l'impression sans impact, dans les pâtes à papier, dans le domaine de l'hygiène personnelle.

20. Mélanges de caoutchoucs vulcanisables et vulcanisats, qui contiennent la silice précipitée selon la revendication 1 présentant les paramètres physico-chimiques suivants :

| | |
|---|---|
| Surface CTAB | 100 à 160 m$^2$/g, |
| Surface BET | 100 à 190 m$^2$/g, |
| Indice DBP | 180 à 300 g/(100 g), |
| Nombre de Sears V$_2$ | 15 à 28 ml/(5 g), |
| Humidité | 4 à 8 %, |

en tant que charge.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0501227 A
- EP 0937755 A
- DE 10124298
- DE 10112441 A1
- EP 0754650 A
- EP 0755899 A
- US 4001379 A
- EP 0901986 A1
- EP 0754650 A1

- DE 3437473
- DE 19609619
- DE 4004781 C
- WO 9909036 A
- EP 1108231 A
- DE 10137809
- DE 10163945
- DE 10223658

**In der Beschreibung aufgeführte Nicht-Patentliteratur**

- **R H. LANGE ; J. BLOEDORN.** Das Elektronen-mikroskop, TEM + REM. Thieme Verlag, 1981